(19) Europäisches Patentamt
European Patent Office
Office européen des brevets

(11) EP 2 750 435 B1

(12) EUROPEAN PATENT SPECIFICATION

(45) Date of publication and mention of the grant of the patent:
**06.09.2017 Bulletin 2017/36**

(21) Application number: **12839071.3**

(22) Date of filing: **01.10.2012**

(51) Int Cl.:
***H04W 24/10*** (2009.01) ***H04J 11/00*** (2006.01)
***H04W 28/16*** (2009.01)

(86) International application number:
**PCT/JP2012/075394**

(87) International publication number:
**WO 2013/051510 (11.04.2013 Gazette 2013/15)**

(54) **WIRELESS COMMUNICATIONS SYSTEM, FEEDBACK METHOD, USER TERMINAL, AND WIRELESS BASE STATION DEVICE**

DRAHTLOSES KOMMUNIKATIONSSYSTEM, RÜCKMELDUNGSVERFAHREN, BENUTZERENDGERÄT UND DRAHTLOSE BASISSTATIONSVORRICHTUNG

SYSTÈME DE COMMUNICATION SANS FIL, PROCÉDÉ DE RETOUR D'INFORMATIONS, TERMINAL D'UTILISATEUR ET DISPOSITIF FORMANT STATION DE BASE SANS FIL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **03.10.2011 JP 2011219571**

(43) Date of publication of application:
**02.07.2014 Bulletin 2014/27**

(60) Divisional application:
**15178232.3 / 2 961 221**

(73) Proprietor: **NTT DOCOMO, INC.**
**Chiyoda-ku**
**Tokyo 100-6150 (JP)**

(72) Inventors:
- **NAGATA, Satoshi**
  **Tokyo 100-6150 (JP)**
- **ABE, Tetsushi**
  **Tokyo 100-6150 (JP)**
- **KISHIYAMA, Yoshihisa**
  **Tokyo 100-6150 (JP)**

(74) Representative: **Hoffmann Eitle**
**Patent- und Rechtsanwälte PartmbB**
**Arabellastraße 30**
**81925 München (DE)**

(56) References cited:
**WO-A1-2010/082884 WO-A1-2011/079294**
**US-A1- 2010 304 682**

- **INTEL CORPORATION: 'Additional evaluation results of downlink CoMP schemes in Scenario 2' 3GPP TSG-RAN WG1 #65 R1-111279, 3GPP 09 May 2011, pages 1 - 6, XP050490960 Retrieved from the Internet: <URL:http://www.3gpp.org/ftp/tsg_ran/WG1_RL1/TSGR1 65/Docs/R1-111279.zip>**
- **LG ELECTRONICS: 'CQI/PMI feedback for CoMP' 3GPP TSG-RAN WG1 MEETING #65 R1-111632, 3GPP 13 May 2011, pages 1 - 2, XP050491399 Retrieved from the Internet: <URL:http://www.3gpp.org/ftp/ tsg_ran/WG1 RL1/TSGR1 65/Docs/R1-111632.zip>**
- **SAMSUNG: 'CoMP Operational Mode Feedback Discussions' 3GPP TSG-RAN WG1 MEETING #57 R1-091869, 3GPP 08 May 2009, pages 1 - 5, XP050339365 Retrieved from the Internet: <URL:http:// www.3gpp.org/ftp/tsg_ran/WG1_RL1/TSGR1_57 / Docs/R1-091869.zip>**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 750 435 B1

## Description

TECHNICAL FIELD

The present invention relates to a radio communication system, a feedback method, a user terminal and a radio base station apparatus that are applicable to a cellular system and so on.

BACKGROUND ART

In the UMTS (Universal Mobile Telecommunications System) network, for the purposes of improving spectral efficiency and improving the data rates, system features based on W-CDMA (Wideband Code Division Multiple Access) are maximized by adopting HSDPA (High Speed Downlink Packet Access) and HSUPA (High Speed Uplink Packet Access). For this UMTS network, for the purposes of further increasing high-speed data rates, providing low delay and so on, long-term evolution (LTE) has been under study (non-patent literature 1).

In the third-generation system, it is possible to achieve a transmission rate of maximum approximately 2 Mbps on the downlink by using a fixed band of approximately 5 MHz. Meanwhile, in the LTE system, it is possible to achieve a transmission rate of about maximum 300 Mbps on the downlink and about 75 Mbps on the uplink by using a variable band which ranges from 1.4 MHz to 20 MHz. Furthermore, in the UMTS network, for the purpose of achieving further broadbandization and higher speed, successor systems of LTE have been under study as well (for example, LTE-Advanced (LTE-A)).

CITATION LIST

NON-PATENT LITERATURE

Non-Patent Literature 1: 3GPP, TR 25.912 (V7.1.0), "Feasibility Study for Evolved UTRA and UTRAN," Sept. 2006

US 2010/304682 A1 relates to a communication system performing a coordinated multipoint transmission (CoMP). A mobile station may measure expected channel quality information when an interference of a serving base station does not exist. The serving base station may determine whether a neighbor base station and a serving base station are eligible to perform the coordinated multipoint transmission. The serving base station may determine whether the neighbor base station and the serving base station are eligible to perform the coordinated multipoint transmission using a criterion associated with an evaluation of an increase in a transmission rate of the mobile station.

WO 2011/079294 A1 relates to generating reference signals for wireless communication systems using multiple transmission entities to communicate with a single user equipment (UE) device. Methods and apparatuses for transmitting - from all cells belonging to a cluster - reference signals for channel state information feedback to user equipment at the same time and frequency resources, are provided.

WO 2010/082884 A1 relates to a method and an arrangement in a user equipment for quantizing channel state information in a coordinated multi-point transmission radio communication system. A dominant path is between the user equipment and a first network node and a non-dominant path is between the user equipment and a second network node. A ratio of the non-dominant path channel response, such as fast fading, to the dominant path channel response is quantized by using a codebook. A method and an arrangement for generating a codebook by applying a log squared error distortion measure in an iterative algorithm are provided. A method and an arrangement in a user equipment for allocating available bits among at least two quantized ratios in a channel state information feedback procedure are provided. The bits are allocated by means of selecting at least one codebook based on statistic properties, such as path gain, of the non-dominant path.

SUMMARY OF THE INVENTION

TECHNICAL PROBLEM

Now, as a promising technique for further improving the system performance of the LTE system, there is inter-cell orthogonalization. For example, in the LTE-A system, intra-cell orthogonalization is made possible by orthogonal multiple access on both the uplink and the downlink. That is to say, on the downlink, orthogonalization is provided between user terminal UEs (User Equipment) in the frequency domain. On the other hand, between cells, like in W-CDMA, interference randomization by repeating one-cell frequency is fundamental.

So, in the 3GPP (3rd Generation Partnership Project), coordinated multiple-point transmission/reception (CoMP) is under study as a technique for realizing inter-cell orthogonalization. In this CoMP transmission/reception, a plurality of cells are coordinated and perform signal processing for transmission and reception for one user terminal UE or for a plurality of user terminal UEs. For example, for the downlink, simultaneous transmission of a plurality of cells, and coordinated scheduling/beam forming, which adopt precoding, are under study. By adopting these CoMP transmission/reception techniques, improvement of throughput performance is expected, especially with respect to user terminal UEs located on cell edges.

When CoMP transmission/reception is adopted, radio base station apparatuses that are arranged in a plurality of cells coordinate and transmit data, and therefore a user terminal UE is required to feed back channel state information, from which adequate received quality can be calculated, when CoMP transmission is adopted.

The present invention has been made in view of the above, and it is therefore an object of the present invention to provide a radio communication system, a feedback method, a user terminal and a radio base station apparatus which make it possible to feed back channel state information, from which adequate received quality can be calculated, when CoMP transmission is adopted.

## SOLUTION TO PROBLEM

A radio communication system according to the present invention is a radio communication system including a plurality of radio base station apparatuses and a user terminal that is configured to be able to communicate with the plurality of radio base station apparatuses, and, in this radio communication system: the radio base station apparatuses include: a transmission section configured to transmit a reference signal for channel state measurement to the user terminal; and a receiving section configured to receive channel state information generated in the user terminal based on the reference signal; and the user terminal includes: a channel state information generating section configured to be able to generate a plurality of pieces of channel state information, including channel state information from which interference from a coordinated cell is cancelled, when the plurality of radio base station apparatuses coordinate and perform transmission; and a transmission section configured to transmit the plurality of pieces of channel sate information to the radio base station apparatus.

A feedback method according to the present invention is a method of feeding back channel state information from a user terminal when a plurality of radio base station apparatuses coordinate and perform transmission, and this method includes the steps in which: a radio base station apparatus transmits a reference signal for channel state measurement to the user terminal; the user terminal generates a plurality of pieces of channel state information, including channel state information from which interference from a coordinated cell is cancelled, based on the reference signal transmitted from the radio base station apparatus; and the user terminal transmits the plurality of pieces of channel state information to the radio base station apparatus.

A user terminal according to the present invention is a user terminal which is configured to be able to communicate with a plurality of radio base station apparatuses, and this user terminal includes: a receiving section configured to receive a reference signal for channel state measurement from a radio base station apparatus; a channel state information generating section configured to be able to generate a plurality of pieces of channel state information, including channel state information from which interference from a coordinated cell is cancelled, based on the reference signal, when the plurality of radio base station apparatuses coordinate and perform transmission; and a transmission section configured to transmit the plurality of pieces of channel sate information to the radio base station apparatus.

A radio base station apparatus according to the present invention is a radio base station apparatus which is configured to be able to perform coordinated transmission with another radio base station apparatus, for a user terminal, and this radio base station apparatus includes: a transmission section configured to transmit a reference signal for channel state measurement to the user terminal; and a receiving section configured to, upon coordinating with the other radio base station apparatus and performing transmission, receive a plurality of pieces of channel state information, which is generated based on the reference signal and which includes channel state information from which interference from a coordinated cell is cancelled, from the user terminal.

## TECHNICAL ADVANTAGE OF THE INVENTION

According to the present invention, it is possible to feed back channel state information, from which adequate received quality can be calculated, when CoMP transmission is adopted.

## BRIEF DESCRIPTION OF DRAWINGS

FIG. 1 provides diagrams to explain coordinated multiple point transmission;
FIG. 2 provides schematic diagrams to show configurations of radio base station apparatuses that are adopted in coordinated multiple point transmission/reception;
FIG. 3 is a schematic diagram to explain a CQI generation method in a user terminal;
FIG. 4 provides diagrams to explain CSI-RS allocation patterns in resource blocks;
FIG. 5 provides diagrams to explain muting in CQI measurement using CSI-RSs;
FIG. 6 is a diagram to explain radio resources on the uplink;
FIG. 7 provides schematic diagrams to show CQI transmission timing on the uplink;
FIG. 8 is a diagram to explain a system configuration of a radio communication system;
FIG. 9 is a block diagram to show an overall configuration of a radio base station apparatus;
FIG. 10 is a block diagram to show an overall configuration of a user terminal;
FIG. 11 is a block diagram to show a configuration of a baseband processing section in a centralized control-type radio base station apparatus;
FIG. 12 is a block diagram to show a configuration of a baseband processing section in an autonomous distributed control-type radio base station apparatus; and
FIG. 13 is a block diagram to show a configuration of a baseband signal processing section in a user terminal.

DESCRIPTION OF EMBODIMENTS

Now, an embodiment of the present invention will be described below in detail with reference to the accompanying drawings.

First, downlink CoMP transmission will be described using FIG. 1. Downlink CoMP transmission includes coordinated scheduling/coordinated beamforming (hereinafter referred to as "CS/CB"), and joint processing. CS/CB refers to a method of transmitting from only one cell to one user terminal UE, and allocates radio resources in the frequency/space domain, taking into account interference from other cells and interference against other cells, as shown in FIG. 1A. On the other hand, joint processing refers to a method of simultaneous transmission from a plurality of cells by adopting precoding, and includes joint transmission to transmit from a plurality of cells to one user terminal UE as shown in FIG. 1B, and dynamic cell selection to select cells instantaneously as shown in FIG. 1C.

As a configuration to realize CoMP transmission/reception, there are, for example, a configuration (centralized control based on an RRE configuration) to include a plurality of remote radio equipment (RREs) that are connected to a radio base station apparatus (radio base station apparatus eNB) by optical fiber and so on, as shown in FIG. 2A, and a configuration (autonomous distributed control based on an independent base station configuration) of a radio base station apparatus (radio base station apparatus eNB), as shown in FIG. 2B. Note that, although FIG. 2A shows a configuration to include a plurality of remote radio equipment RREs, it is equally possible to use a configuration to include single remote radio equipment RRE, as shown in FIG. 1.

In the configuration shown in FIG. 2A (RRE configuration), remote radio equipment RRE 1 and RRE 2 are controlled in a centralized fashion in a radio base station apparatus eNB. In the RRE configuration, a radio base station apparatus eNB (centralized base station) that performs baseband signal processing and control for a plurality of remote radio equipment RREs, and each cell (that is, each remote radio equipment RRE), are connected by baseband signals using optical fiber, so that it is possible to execute radio resource control between the cells in the centralized base station altogether. That is, the problems of signaling delay and overhead between radio base station apparatus eNBs, which become problems in an independent base station configuration, are insignificant, and high-speed radio resource control between cells is relatively easy. Consequently, in the RRE configuration, it is possible to adopt, on the downlink, a method to use fast signal processing between cells such as simultaneous transmission of a plurality of cells.

On the other hand, in the configuration shown in FIG. 2B (independent base station configuration), a plurality of radio base station apparatus eNBs (or RREs) each perform radio resource allocation control such as scheduling. In this case, by using the X2 interface between the radio base station apparatus eNB of the cell 1 and the radio base station apparatus eNB of the cell 2, radio resource allocation information such as timing information and scheduling is transmitted to one of the radio base station apparatus eNBs when necessary, thereby coordinating between the cells.

In the CoMP transmission (CS/CB) shown in FIG. 1A, a user terminal UE measures channel quality based on a reference signal (CSI-RS: Channel State Information-Reference Signal) transmitted from a radio base station apparatus eNB, and generates channel quality information (CQI: Channel Quality Indicator). To be more specific, an SINR (Signal to Interference and Noise Ratio) is calculated based on the CSI-RS, and a CQI to match the calculated SINR is selected. The selected CQI is fed back to the radio base station apparatus eNB on the uplink. The radio base station apparatus eNB calculates the SINR based on the CQI that is fed back from the user terminal UE, and, for example, determines the modulation scheme and coding rate for data transmission, executes scheduling control, and so on.

To determine the modulation scheme and coding rate for data transmission and execute scheduling control as described above, for example, the SINR to be calculated from the CQI that is fed back from the user terminal UE is used. Now, the method of generating CQIs to be fed back from a user terminal UE will be described. FIG. 3 is a schematic diagram to explain a method of generating CQIs in a user terminal UE. Note that although FIG. 3 shows an RRE configuration, the same applies to an independent base station configuration as well.

In a system of the LTE scheme (LTE system) where the CoMP transmission/reception technique is not adopted, the SINR (=$FB_1$) with respect to the received level of the cell 1 and the SINR (=$FB_2$) with respect to the received level of the cell 2 are determined by following formulas 1 and 2, respectively. Note that, in the following formulas, "$S_1$" stands for the received signal component (power) from the cell 1 (radio base station apparatus eNB), "$S_2$" stands for the received signal component (power) from the cell 2 (remote radio equipment RRE), "I" stands for interference components (power) from cells other than the cell 1 and the cell 2, and "N" stands for noise components (power). The SINRs determined by formulas 1 and 2 are fed back to the radio base station apparatus eNB as CQIs.

$$FB_1 = \frac{S_1}{S_2 + I + N} \quad \text{... (Formula 1)}$$

$$FB_2 = \frac{S_2}{S_1 + I + N} \quad \text{... (Formula 2)}$$

On the other hand, when CoMP transmission (CS/CB) is adopted, the SINR of each cell needs to be calculated taking into account the transmission weights by which the received signal components $S_1$ and $S_2$ are multiplied in the radio base station apparatus eNB and the remote radio equipment RRE. For example, the SINR with respect to the received level of the cell 1 when CS (Coordinated Scheduling) is adopted needs to be determined by following formula 3 in the radio base station apparatus eNB. Also, the SINR with respect to the received level of the cell 1 when CB (Coordinated Beamforming) is adopted needs to be determined by following formula 4 in the radio base station apparatus eNB. Note that, in the formulas, "$w_1$" stands for the transmission weight by which the signal from the cell 1 is multiplied in the radio base station apparatus eNB so as to be received as the received signal component $S_1$ in the user terminal UE, and "$w_2$" stands for the transmission weight by which the signal from the cell 2 is multiplied in the radio base station apparatus eNB so as to be received as the received signal component $S_2$ in the user terminal UE. That is to say, "$w_1S_1$" corresponds to the transmitting signal component that is transmitted from the cell 1 on the assumption of being received as the received signal components $S_1$ in the user terminal UE, and "$w_2S_2$" corresponds to the transmitting signal component that is transmitted from the cell 2 on the assumption of being received as the received signal components $S_2$ in the user terminal UE. The SINR with respect to the received level of the cell 2 can also be determined from formulas that are equivalent to formulas 3 and 4.

$$SINR = \frac{w_1 S_1}{I + N} \quad \text{... (Formula 3)}$$

$$SINR = \frac{w_1 S_1}{w_2 S_2 + I + N} \quad \text{... (Formula 4)}$$

As described above, in the LTE system, the SINRs to be determined by formulas 1 and 2 are fed back as CQIs. The base station apparatus eNB calculates SINRs based on these CQIs. However, when CoMP transmission (CS/CB) is adopted, as shown in formulas 3 and 4, it is necessary to take into account the transmission weights $w_1$ and $w_2$ by which the received signal components $S_1$ and $S_2$ from the cell 1 and the cell 2 are multiplied, and therefore it is not possible to calculate SINRs accurately, only from the CQIs that are fed back based on formulas 1 and 2. Consequently, when the CQI feedback method of the LTE system is adopted, there is a problem that the radio base station apparatus eNB is unable to calculate adequate SINRs when CoMP transmission (CS/CB) is adopted, and therefore is unable to execute downlink transmission control adequately.

The present inventors have focused on this point and arrived at the present invention upon finding out that, when CoMP transmission (CS/CB) is adopted, adequate downlink transmission control is made possible by allowing a radio base station apparatus eNB to acquire feedback information, from which adequate SINRs can be calculated.

That is to say, a gist of the present invention is that, when CoMP transmission (CS/CB) is adopted, a user terminal UE feeds back channel state information that allows a radio base station apparatus eNB to calculate adequate received quality. Now, specific modes will be described below with reference to the network configuration shown in FIG. 3.

(First Mode)

With the feedback method according to the first mode, in a state in which interference between cells that perform CoMP transmission is cancelled, CQIs related to the received levels of both the serving cell (the cell 1 shown in FIG. 3) and a coordinated cell (the cell 2 shown in FIG. 3) are fed back. In the feedback method according to the present mode, feedback information, which is CQIs, is defined by following formulas 5 and 6. In the feedback method according to the present mode, interference of the serving cell or the coordinated cell is cancelled by adopting muting (zero-power transmission), which is under study in the system of the LTE-A scheme (LTE-A system).

$$FB_{\mathrm{A}} = \frac{S_1}{I+N} \quad \text{... (Formula 5)}$$

$$FB_{\mathrm{B}} = \frac{S_2}{I+N} \quad \text{... (Formula 6)}$$

Before muting to be used to cancel interference between cells that perform CoMP transmission is described, the CSI-RS, which is under study for the downlink of the LTE-A system, will be described. The CSI-RS is a reference signal to be used to measure channel states (CSI measurement), including, for example, CQIs, PMIs (Precoding Matrix Indicators), and RIs (Rank Indicators). Unlike CRSs (Cell-specific Reference Signals) that are allocated to all subframes, CSI-RSs are allocated in a predetermined cycle -- for example, in a 10-subframe cycle. Also, CSI-RSs are specified by the parameters of position, sequence and transmission power. The positions of CSI-RSs include subframe offset, cycle and subcarrier-symbol offset (index).

In one resource block defined in LTE, CSI-RSs are allocated not to overlap control signals such as the PDCCH (Physical Downlink Control Channel) signal, user data such as the PDSCH (Physical Downlink Shared Channel) signal, and other reference signals such as CRSs and DM-RSs (DeModulation-Reference Signals). One resource block consists of twelve subcarriers that are consecutive in the frequency direction and fourteen symbols that are consecutive in the time axis direction. From the perspective of suppressing the PAPR (Peak-to-Average Power Ratio), two resource elements that neighbor each other in the time axis direction are allocated as a set, as resources which can transmit a CSI-RS.

In the CSI-RS configurations shown in FIG. 4, forty resource elements are secured as CSI-RS resources (reference signal resources). In these forty resource elements, CSI-RS patterns (CSI configuration) are set according to the number of CSI-RS ports (the number of antennas). In each CSI-RS pattern, one resource element is allocated for a CSI-RS, for every one CSI-RS port. When the number of CSI-RS ports is two, CSI-RSs are allocated to two resource elements among the forty resource elements. As for the allocation pattern, for example, one of the twenty patterns (indices #0 to #19) shown in FIG. 4A is selected.

When the number of CSI-RS ports is four, CSI-RSs are allocated to four resource elements among the forty resource elements. As for the allocation pattern, for example, one of the ten patterns (indices #0 to #9) shown in FIG. 4B is selected. When the number of CSI-RS ports is eight, CSI-RSs are allocated to eight resource elements among the forty resource elements. As for the allocation pattern, for example, one of the five patterns (indices #0 to #4) shown in FIG. 4C is selected. Note that, in the CSI-RS patterns, user data is allocated to resource elements where CSI-RSs are not allocated. Then, in the CSI-RSs, interference between cells is reduced by selecting different CSI-RS patterns on a per cell basis.

Now, in CSI measurement using CSI-RSs, cases might occur where the accuracy of measurement is deteriorated by data interference from other cells. For example, in the case shown in FIG. 5A, user data is allocated to downlink resource blocks of the cell 1 (serving cell) that correspond to the CSI-RS of the cell 2 (coordinated cell). Also, user data is allocated to downlink resource blocks of the cell 2 that correspond to the CSI-RS of the cell 1. Such user data may become interference components against the CSI-RS of each cell, and in particular, become a factor to deteriorate the accuracy of CQI measurement in user terminal UEs located near the border between the cell 1 and the cell 2.

In order to improve the deterioration of the accuracy of CQI measurement due to the positions where user data is allocated, muting is under study. In muting, as shown in FIG. 5B, user data is not allocated to resources corresponding to the CSI-RS of another cell. To be more specific, downlink resource blocks of the cell 1 are muted (zero power transmission) in accordance with the CSI-RS of the cell 2. Also, downlink resource blocks of the cell 2 are muted (zero power transmission) in accordance with the CSI-RS of the cell 1. By means of this configuration, interference components against CSI-RSs, arising from user data of other cells, is cancelled, so that it is possible to improve the accuracy of CQI measurement in user terminal UEs.

With the feedback method according to the present mode, in CQI measurement, it is possible to cancel interference of the serving cell or a coordinated cell by using the above-described muting, and acquire feedback information defined by formulas 5 and 6.

To be more specific, as shown in FIG. 5B, in the resource block of the cell 2, resources corresponding to the CSI-RS of the cell 1 are set as muting resources, and the transmission power of the target resources is made zero. By this means, in the CQI measurement of the cell 1, which is the serving cell, it is possible to remove interference of the cell 2, which is a coordinated cell. That is, it is possible to acquire feedback information in a mode not including the received signal component $S_2$ from the cell 2 (the feedback information defined in formula 5), as the CQI of the cell 1.

Also, as shown in FIG. 5B, in the resource block of the cell 1, resources corresponding to the CSI-RS of the cell 2 are set as muting resources, and the transmission power of the target resources is made zero. By this means, in the CQI measurement of the cell 2, which is a coordinated cell, it is possible to remove interference of the cell 1, which is the serving cell. That is, it is possible to acquire feedback information of a mode not including the received signal component $S_1$ from the cell 1 (the feedback information defined in formula 6), as the CQI of the cell 2.

By means of the feedback information defined by formulas 5 and 6, the radio base station apparatus eNB is able to calculate the SINRs defined by formulas 3 and 4. For example, the SINR with respect to the received level of the cell 1 when CS is adopted is calculated from formulas 3 and 5, as shown in formula 7. On the other hand, the SINR with respect to the received level of the cell 1 when CB is adopted is calculated from formulas 4, 5 and 6, as shown in formula 8. Note that, when CoMP transmission is not adopted, the SINR with respect to the received level of the cell 1 is calculated as shown in formula 9. $w_1$ and $w_2$, which represent the transmission weight of each cell, are determined in the radio base station apparatus eNB, and are known in the radio base station apparatus eNB.

$$SINR = \frac{w_1 S_1}{I + N} = w_1 FB_{\mathrm{A}} \quad \ldots \text{ (Formula 7)}$$

$$SINR = \frac{w_1 S_1}{w_2 S_2 + I + N} = \frac{w_1 FB_{\mathrm{A}}}{w_2 FB_{\mathrm{B}} + 1} \quad \ldots \text{ (Formula 8)}$$

$$SINR = \frac{w_1 S_1}{S_2 + I + N} = \frac{w_1 FB_{\mathrm{A}}}{FB_{\mathrm{B}} + 1} \quad \ldots \text{ (Formula 9)}$$

In this way, by using the feedback information defined by formulas 5 and 6, even when CoMP transmission (CS/CB) is adopted, it is possible to calculate adequate SINRs in the radio base station apparatus eNB.

The user terminal UE is able to calculate feedback information for CoMP transmission, based on information reported from the radio base station apparatus eNB (for example, information about the multiplexing positions and power of reference signals such as CSI-RSs). For example, the user terminal UE is able to calculate feedback information (CQI) in a mode not including the received signal component $S_2$, as shown in formula 5, by being reported, from the radio base station apparatus eNB, that the received signal component ($S_2$) of the cell 2 does not have to be taken into account (that is, the received signal component $S_2$ is not to be included in interference components).

Note that the SINR with respect to the received level of the cell 2 can be calculated in a similar way to the SINR of the cell 1, by using formulas 5 and 6. Also, with the feedback method according to the present mode, the feedback information (CQI) and SINRs represented by formulas are by no means limited to the notations in each formula, and may include all that is substantially equivalent given by conversion of formulas and so on.

(Second Method)

With the feedback method according to a second mode, in a state where interference of one cell performing CoMP transmission is cancelled, the CQI of the serving cell (the cell 1 shown in FIG. 3) is fed back. With the feedback method according to the present mode, feedback information is defined by following formulas 10 and 11. The feedback information of formula 10 is acquired under interference of a coordinated cell (the cell 2 shown in FIG. 3) in CoMP. The feedback information of formula 11 can be acquired by cancelling interference from the coordinated cell (the cell 2) in CoMP.

$$FB_{\mathrm{C}} = \frac{S_1}{S_2 + I + N} \quad \text{... (Formula 10)}$$

$$FB_{\mathrm{D}} = \frac{S_1}{I + N} \quad \text{... (Formula 11)}$$

The feedback information defined by formula 10 is the same as the feedback information defined in the LTE system (see formula 1).

The feedback information defined by formula 11 can be acquired by cancelling interference from the cell 2, which is a coordinated cell, in the CQI measurement of the cell 1, which is the serving cell. To be more specific, in the resource block of the cell 2, resources corresponding to the CSI-RS of the cell 1 are set as muting resources, and the transmission power of the target resources is made zero.

By means of the feedback information defined by formulas 10 and 11, the radio base station apparatus eNB is able to calculate the SINRs defined by formulas 3 and 4. For example, the SINR with respect to the received level of the cell 1 when CS is adopted is calculated from formulas 3 and 11, as shown in formula 12. On the other hand, the SINR with respect to the received level of the cell 1 when CB is adopted is calculated from formulas 4, 10 and 11, as shown in formula 13. Note that, when CoMP transmission is not adopted, the SINR with respect to the received level of the cell 1 is calculated as shown in formula 14. $w_1$ and $w_2$, which represent the transmission weight of each cell, are determined in the radio base station apparatus, and are known in the radio base station apparatus.

$$SINR = \frac{w_1 S_1}{I + N} = w_1 FB_{\mathrm{D}} \quad \text{... (Formula 12)}$$

$$SINR = \frac{w_1 S_1}{w_2 S_2 + I + N} = \frac{w_1 FB_{\mathrm{D}}}{w_2\left(\dfrac{FB_{\mathrm{D}}}{FB_{\mathrm{C}}} - 1\right) + 1} \quad \text{... (Formula 13)}$$

$$SINR = \frac{w_1 S_1}{S_2 + I + N} = w_1 FB_{\mathrm{C}} \quad \text{... (Formula 14)}$$

In this way, by using the feedback information defined by formulas 10 and 11, even when CoMP transmission (CS/CB) is adopted, it is possible to calculate adequate SINRs in the radio base station apparatus eNB. In particular, with the feedback method according to the present mode, information (formula 10) that is common to the feedback information defined in the LTE system is used, so that it is possible to calculate adequate SINRs while maintaining changes from the LTE system, required upon CQI measurement, minimal.

The user terminal UE is able to calculate feedback information for CoMP transmission, based on information reported from the radio base station apparatus eNB (for example, information about the multiplexing positions and power of reference signals such as CSI-RSs). For example, the user terminal UE is able to calculate feedback information (CQI) in a mode not including the received signal component $S_2$, as shown in formula 11, by being reported, from the radio base station apparatus eNB, that the received signal component ($S_2$) of the cell 2 does not have to be taken into account (that is, the received signal component $S_2$ is not to be included in interference components).

Note that the SINR with respect to the received level of the cell 2 can be calculated in a similar way to the SINR of the cell 1. Also, with the feedback method according to the present mode, the feedback information (CQI) and SINRs represented using formulas are by no means limited to the notations in each formula, and may include all that is substantially equivalent given by conversion of formulas and so on.

(Third Mode)

With the feedback method according to a third mode, in a state where interference of one cell performing CoMP transmission is cancelled, the CQI of the serving cell (the cell 1 shown in FIG. 3) is fed back. With the feedback method according to the present mode, feedback information is defined by following formulas 15 and 16. The feedback information of formula 15 is acquired by cancelling interference of a coordinated cell (the cell 2 shown in FIG. 3) in CoMP. The feedback information of formula 16 can be acquired under interference from the coordinated cell (the cell 2) in CoMP.

$$FB_{\mathrm{E}} = \frac{S_1}{I + N} \quad \text{... (Formula 15)}$$

$$FB_{\mathrm{F}} = \frac{S_1}{S_2} \quad \text{... (Formula 16)}$$

The feedback information defined by formula 15 can be acquired by cancelling interference from the cell 2, which is a coordinated cell, in the CQI measurement of the cell 1, which is the serving cell. To be more specific, in the resource block of the cell 2, resources corresponding to the CSI-RS of the cell 1 are set as muting resources, and the transmission power of the target resources is made zero.

The feedback information defined by formula 16 can be acquired, under interference of the cell 2, which is a coordinated cell, as the ratio of the received signal component ($S_1$) from the cell 1, which is the serving cell, and the received signal component ($S_2$) from the cell 2, which is a coordinated cell.

By means of the feedback information defined by formulas 15 and 16, the radio base station apparatus eNB is able to calculate the SINRs represented by formulas 3 and 4. For example, the SINR with respect to the received level of the cell 1 when CS is adopted is calculated from formulas 3 and 15, as shown in formula 17. On the other hand, the SINR with respect to the received level of the cell 1 when CB is adopted is calculated from formulas 4, 15 and 16, as shown in formula 18. Note that, when CoMP transmission is not adopted, the SINR with respect to the received level of the cell 1 is calculated as shown in formula 19. $w_1$ and $w_2$, which represent the transmission weight of each cell, are determined in the radio base station apparatus, and are known in the radio base station apparatus.

$$SINR = \frac{w_1 S_1}{I + N} = w_1 FB_{\mathrm{E}} \quad \text{... (Formula 17)}$$

$$SINR = \frac{w_1 S_1}{w_2 S_2 + I + N} = \frac{w_1 FB_{\mathrm{E}} FB_{\mathrm{F}}}{w_2 FB_{\mathrm{E}} + FB_{\mathrm{F}}} \quad \text{... (Formula 18)}$$

$$SINR = \frac{w_1 S_1}{S_2 + I + N} = \frac{w_1 FB_{\mathrm{E}}}{\frac{FB_{\mathrm{E}}}{FB_{\mathrm{F}}} + 1} \quad \text{... (Formula 19)}$$

In this way, by using the feedback information defined by formulas 15 and 16, even when CoMP transmission (CS/CB) is adopted, it is possible to calculate adequate SINRs in the radio base station apparatus eNB. With the feedback method according to the present mode, feedback information (formula 16) to be defined by the ratio of received signal components is used, so that it is possible to reduce the number of bits that relate to transmission of feedback information.

The user terminal UE is able to calculate feedback information for CoMP transmission, based on information reported from the radio base station apparatus eNB (for example, information about the multiplexing positions and power of reference signals such as CSI-RSs). For example, the user terminal UE is able to calculate the ratio of $S_1$ and $S_2$ (signal power ratio) in the mode shown in formula 16, by being reported, from the radio base station apparatus eNB, to calculate the ratio of the received signal component ($S_1$) of the cell 1 and the received signal component ($S_2$) of the cell 2.

Note that the SINR with respect to the received level of the cell 2 can be calculated in a similar way to the SINR of the cell 1. Also, with the feedback method according to the present mode, the feedback information (CQI) and SINRs represented using formulas are by no means limited to the notations in each formula, and may include all that is substantially equivalent given by conversion of formulas and so on.

(Fourth Mode)

With the feedback method according to the fourth mode, the CQI of the serving cell (the cell 1 shown in FIG. 3) is fed back without cancelling interference between cells that perform CoMP transmission. With the feedback method according to the present mode, feedback information is defined by following formulas 20 and 21. The feedback information of formulas 20 and 21 is acquired under interference of a coordinated cell in CoMP (the cell 2 shown in FIG. 3).

$$FB_{\mathrm{G}} = \frac{S_1}{S_2 + I + N} \quad \text{... (Formula 20)}$$

$$FB_{\mathrm{H}} = \frac{S_1}{S_2} \quad \text{... (Formula 21)}$$

The feedback information defined by formula 20 is the same as the feedback information defined in the LTE system (see formula 1).

The feedback information defined by formula 21 can be acquired, under interference of the cell 2, which is a coordinated cell, as the ratio of the received signal component ($S_1$) from the cell 1, which is the serving cell, and the received signal component ($S_2$) from the cell 2, which is a coordinated cell.

By means of the feedback information defined by formulas 20 and 21, the radio base station apparatus eNB is able to calculate the SINRs represented by formulas 3 and 4. For example, the SINR with respect to the received level of the cell 1 when CS is adopted is calculated from formulas 3, 20 and 21, as shown in formula 22. On the other hand, the SINR with respect to the received level of the cell 1 when CB is adopted is calculated from formulas 4, 20 and 21, as shown in formula 23. Note that, when CoMP transmission is not adopted, the SINR with respect to the received level of the cell 1 is calculated as shown in formula 24. $w_1$ and $w_2$, which represent the transmission weight of each cell, are determined in the radio base station apparatus eNB, and are known in the radio base station apparatus eNB.

$$SINR = \frac{w_1 S_1}{I + N} = \frac{w_1 FB_{\mathrm{G}}}{1 - FB_{\mathrm{G}} FB_{\mathrm{H}}} \quad \text{... (Formula 22)}$$

$$SINR = \frac{w_1 S_1}{w_2 S_2 + I + N} = \frac{w_1 FB_{\mathrm{G}}}{1 - (1 - w_2) FB_{\mathrm{G}} FB_{\mathrm{H}}} \quad \text{... (Formula 23)}$$

$$SINR = \frac{w_1 S_1}{S_2 + I + N} = w_1 FB_{\mathrm{G}} \quad \text{... (Formula 24)}$$

In this way, by using the feedback information defined by formulas 20 and 21, even when CoMP transmission (CS/CB) is adopted, it is possible to calculate adequate SINRs in the radio base station apparatus eNB. With the feedback method according to the present mode, information (formula 20) that is common to the feedback information defined in the LTE system is used, so that it is possible to calculate adequate SINRs while maintaining changes from the LTE system, required upon CQI measurement, minimal. Also, since feedback information (formula 21) to be defined by the ratio of received signal components is used, it is possible to reduce the number of bits that relate to transmission of feedback information.

The user terminal UE is able to calculate feedback information for CoMP transmission, based on information reported from the radio base station apparatus eNB (for example, information about the multiplexing positions and power of reference signals such as CSI-RSs). For example, the user terminal UE is able to calculate the ratio of $S_1$ and $S_2$ (signal power ratio) in the mode shown in formula 21, by being reported, from the radio base station apparatus eNB, to calculate the ratio of the received signal component ($S_1$) of the cell 1 and the received signal component ($S_2$) of the cell 2.

Note that the SINR with respect to the received level of the cell 2 can be calculated in a similar way to the SINR of the cell 1. Also, with the feedback method according to the present mode, the feedback information (CQI) and SINRs represented by formulas are by no means limited to the notations in each formula, and may include all that is substantially equivalent given by conversion of formulas and so on.

Next, the method of reporting the above-described CQIs generated in a user terminal UE to a radio base station apparatus eNB will be described. In the LTE system, an uplink signal is mapped to radio resources as shown in FIG. 6 and transmitted from the user terminal UE to the radio base station apparatus eNB. For example, uplink user data is transmitted using an uplink shared channel (PUSCH: Physical Uplink Shared Channel). Also, uplink control information (UCI) including CQIs, is transmitted using the PUSCH when transmitted with uplink user data, and transmitted using the uplink control channel (PUCCH: Physical Uplink Control Channel) when transmitted alone.

Now, as shown in FIG. 6, radio resources for the PUCCH are limited to a predetermined frequency band, and therefore the amount of data that can be transmitted using the PUCCH is also limited. So, feedback information (CQI) in the above-described feedback methods according to the first mode to the fourth mode can be transmitted using the PUSCH. In this case, for example, one or both of two types of feedback information that are defined in the above-described feedback methods according to the first mode to the fourth mode may be transmitted based on higher control information that is reported by higher control signals (higher layer signaling) such as RRC signaling. For example, with the feedback method according to the first mode, feedback information $FB_A$ of the serving cell, which may have significant influence on communication, is transmitted on a regular basis, and feedback information $FB_B$ of a coordinated cell may be transmitted only when so commanded by higher control information. The same applies to the other modes as well. By this means, it is possible to use radio resources effectively while maintaining the quality of communication.

Also, in this case, the two types of feedback information may be transmitted altogether or may be transmitted separately, by using the same subframe or by using a plurality of subframes. Furthermore, two types of feedback information may have the same transmission cycle or may have different transmission cycles. For example, with the feedback method according to the first mode, it may be possible to make the transmission cycle of feedback information $FB_A$ of the serving cell, which may have significant influence on communication, short, and make the transmission cycle of feedback information $FB_B$ of a coordinated cell long. The same applies to the other modes as well. In this case, too, it is possible to use radio resources effectively while maintaining the quality of communication.

Furthermore, the feedback information (CQI) in the above-described feedback methods according to the first mode to the fourth mode may transmitted by the PUCCH. In this case, as shown in FIG. 7A, it is possible to transmit two types of feedback information ($FB_x$ and $FB_y$) in the same subframe. Also, as shown in FIG. 7B, it is equally possible to transmit two types of feedback information ($FB_x$ and $FB_y$) in different subframes. When the two types of feedback information are transmitted in different subframes, their cycle of transmission may be the same or may be different. For example, with the feedback method according to the first mode, it may be possible to make the transmission cycle of feedback information $FB_A$ of the serving cell, which may have significant influence on communication, short, and make the transmission cycle of feedback information $FB_B$ of a coordinated cell long. The same applies to the other modes as well. By this means, it is possible to use radio resources effectively while maintaining the quality of communication.

Note that it is possible to use the above-described feedback methods according to the first mode to the fourth mode, with the feedback method in the LTE system, on a selective basis. That is to say, it is possible to switch between the feedback method in the LTE system and the above-described feedback methods according to the first mode to the fourth mode, according to whether or not CoMP transmission is adopted. This switching may be done based on, for example, higher control information that is reported by higher control signals. In this way, when CoMP transmission is not adopted, the feedback information according to the feedback method of the LTE system may be used, and, when CoMP transmission is adopted, the feedback information according to the above-described feedback methods according to the first mode to the fourth mode may be used, so that it is possible to execute various control adequately.

Now, an embodiment of the present invention will be described in detail. FIG. 8 is a diagram to explain a system configuration of a radio communication system according to the present embodiment. Note that the radio communication system shown in FIG. 8 is a system to accommodate, for example, the LTE system or SUPER 3G. This radio communication system uses carrier aggregation, which makes a plurality of fundamental frequency blocks, in which the system band of the LTE system is one unit, as one. Also, this radio communication system may be referred to as "IMT-Advanced" or may be referred to as "4G."

As shown in FIG. 8, a radio communication system 1 is configured to include radio base station apparatuses 20A and 20B and a plurality of the first and second user terminals 10A and 10B that communicate with the radio base station apparatuses 20A and 20B. The radio base station apparatuses 20A and 20B are connected with a higher station apparatus 30, and this higher station apparatus 30 is connected with a core network 40. Also, the radio base station apparatuses 20A and 20B are mutually connected by wire connection or by wireless connection. The first and second user terminals 10A and 10B are able to communicate with the radio base station apparatuses 20A and 20B in cells 1 and 2. Note that the higher station apparatus 30 includes, for example, an access gateway apparatus, a radio network controller (RNC), a mobility management entity (MME) and so on, but is by no means limited to these.

Although the first and second user terminals 10A and 10B may be either LTE terminals or LTE-A terminals, the following description will be given simply with respect to the first and second user terminals 10A and 10B unless specified otherwise. Also, although, for ease of explanation, the radio base station apparatuses 20A and 20B and the first and second user terminals 10A and 10B, which are mobile terminal apparatuses, will be described to perform radio communication, more generally, the first and second user terminals 10A and 10B may be user apparatuses including fixed terminal apparatuses.

In the radio communication system 1, as radio access schemes, OFDMA (Orthogonal Frequency Division Multiple Access) is applied to the downlink, and SC-FDMA (Single-Carrier-Frequency-Division Multiple Access) is applied to the uplink, but the radio access schemes are not limited to these. OFDMA is a multi-carrier transmission scheme to perform communication by dividing a frequency band into a plurality of narrow frequency bands (subcarriers) and mapping data to each subcarrier. SC-FDMA is a single carrier transmission scheme to reduce interference between terminals by dividing, per terminal, the system band into bands formed with one or continuous resource blocks, and allowing a plurality of terminals to use mutually different bands.

Here, communication channels will be described. The downlink communication channels include a PDSCH (Physical Downlink Shared Channel), which is used by the first and second user terminals 10A and 10B as a downlink data channel on a shared basis, and downlink L1/L2 control channels (PDCCH, PCFICH, and PHICH). Transmission data and higher control information are transmitted by the PDSCH. Scheduling information and so on for the PDSCH and the PUSCH are transmitted by the PDCCH (Physical Downlink Control Channel). The number of OFDM symbols to use for the PDCCH is transmitted by the PCFICH (Physical Control Format Indicator Channel). HARQ ACK/NACK for the PUSCH are transmitted by the PHICH (Physical Hybrid-ARQ Indicator Channel).

The uplink communication channels include a PUSCH, which is an uplink data channel used by the user terminals 10A and 10B on a shared basis, and a PUCCH, which is an uplink control channel. By means of this PUSCH, transmission data and higher control information are transmitted. Also, by means of the PUCCH, downlink radio quality information (CQI: Channel Quality Indicator), ACK/NACK and so on are transmitted.

Now, referring to FIG. 9, an overall configuration of a radio base station apparatus according to the present embodiment will be explained. Note that the radio base station apparatuses 20A and 20B have the same configuration and therefore will be described simply as "radio base station apparatus 20." Also, the first and second user terminals 10A and 10B have the same configuration and therefore will be described simply as "user terminal 10." The radio base station apparatus 20 has transmitting/receiving antennas 201a and 201b, amplifying sections 202a and 202b, transmitting/receiving sections 203a and 203b, a baseband signal processing section 204, a call processing section 205, and a transmission path interface 206. Transmission data to be transmitted from the radio base station apparatus 20 to the user terminal 10 on the downlink is input from the higher station apparatus 30, into the baseband signal processing section 204, via the transmission path interface 206.

In the baseband signal processing section 204, a downlink data channel signal is subjected to PDCP layer processes, division and coupling of transmission data, RLC (Radio Link Control) layer transmission processes such as an RLC retransmission control transmission process, MAC (Medium Access Control) retransmission control, including, for example, a HARQ transmission process, scheduling, transport format selection, channel coding, an inverse fast Fourier transform (IFFT) process, and a precoding process. Furthermore, as for the signal of the physical downlink control channel, which is a downlink control channel, transmission processes such as channel coding and an inverse fast Fourier transform are performed.

Also, the baseband signal processing section 204 reports control information for allowing each user terminal 10 to perform radio communication with the radio base station apparatus 20, to the user terminals 10 connected to the same cell, by a broadcast channel. Information for communication in the cell includes, for example, the system bandwidth on the uplink and the downlink, identification information of a root sequence (root sequence index) for generating signals of random access preambles of the PRACH (Physical Random Access Channel), and so on.

Baseband signals that are output from the baseband signal processing section 204 are converted into a radio frequency band in the transmitting/receiving sections 203a and 203b. The amplifying sections 202a and 202b amplify the radio frequency signals having been subjected to frequency conversion, and output the results to the transmitting/receiving antennas 201a and 201b.

On the other hand, as for a signal to be transmitted from the user terminal 10 to the radio base station apparatus 20 on the uplink, radio frequency signals that are received in the transmitting/receiving antennas 201 are amplified in the amplifying sections 202a and 202b, converted into baseband signals by frequency conversion in the transmitting/receiving sections 203a and 203b, and input in the baseband signal processing section 204.

The baseband signal processing section 204 applies an FFT process, an IDFT process, error correction decoding, a MAC retransmission control receiving process, and RLC layer and PDCP layer receiving processes, to transmission data included in a baseband signal that is received on the uplink. The decoded signal is transferred to the higher station apparatus 30 through the transmission path interface 206.

The call processing section 205 performs call processing such as setting up and releasing communication channels, manages the state of the radio base station apparatus 20 and manages the radio resources.

Next, referring to FIG. 10, an overall configuration of a user terminal according to the present embodiment will be described. An LTE terminal and an LTE-A terminal have the same hardware configurations in principle parts, and therefore will be described indiscriminately. A user terminal 10 has a transmitting/receiving antenna 101, an amplifying section 102, a transmitting/receiving section 103, a baseband signal processing section 104, and an application section 105.

As for downlink data, a radio frequency signal that is received in the transmitting/receiving antenna 101 is amplified in the amplifying section 102, and subjected to frequency conversion and converted into a baseband signal in the transmitting/receiving section 103. This baseband signal is subjected to receiving processes such as an FFT process, error correction decoding and retransmission control, in the baseband signal processing section 104. In this downlink data, downlink transmission data is transferred to the application section 105. The application section 105 performs processes related to higher layers above the physical layer and the MAC layer. Also, in the downlink data, broadcast information is also transferred to the application section 105.

Meanwhile, uplink transmission data is input from the application section 105 to the baseband signal processing section 104. In the baseband signal processing section 104, a mapping process, a retransmission control (HARQ) transmission process, channel coding, a DFT process, and an IFFT process are performed. The baseband signal output from the baseband signal processing section 104 is converted into a radio frequency band in the transmitting/receiving section 103. After that, the radio frequency signal having been subjected to frequency conversion is amplified in the amplifying section 102 and transmitted from the transmitting/receiving antenna 101.

The function blocks of a radio base station apparatus will be described with reference to FIG. 11. The radio base station apparatus shown in FIG. 11 has a centralized control-type radio base station configuration. In the event of centralized control, a given radio base station apparatus (centralized radio base station apparatus, which is the cell 1 in FIG. 11) executes radio resource allocation control such as scheduling, altogether, and a subordinate radio base station apparatus (remote radio equipment, which is the cell 2 in FIG. 11) follows the radio resource allocation result by the radio base station apparatus. In this case, feedback information (CQI) is used as necessary information for radio resource allocation between a plurality of cells and so on, in the user scheduling control section 922 of the radio base station apparatus.

Note that the function blocks of FIG. 11 primarily relate to the processing content of the baseband processing section 204 shown in FIG. 9. Also, the function blocks shown in FIG. 11 are simplified to explain the present invention, and assumed to have the configurations which a baseband processing section 204 should normally have.

The transmission section on the centralized radio base station apparatus (the cell 1) side has a downlink control information generating section 901, a downlink control information coding/modulation section 902, a downlink reference signal generating section 903, a downlink transmission data generating section 904, a higher control information generating section 905 and a downlink transmission data coding/modulation section 906. Also, the transmission section on the centralized radio base station apparatus (the cell 1) side has a mapping section 907, a precoding multiplication section 908, a precoding weight generating section 909, a downlink channel multiplexing section 910, IFFT sections 911 (911a and 911b), CP adding sections 912 (912a and 912b), transmission amplifiers 913 (913a and 913b), transmitting antennas 914 (914a and 914b), a control channel signal demodulation section 920, a received quality measurement section 921, and a user scheduling control section 922. Note that the transmission amplifiers 913 and transmitting antennas 914 correspond to the amplifying sections 202 and transmitting/receiving antennas 201 shown in FIG. 9, respectively.

Meanwhile, the transmission section on the subordinate cell remote radio equipment (the cell 2) side has a downlink control information generating section 931, a downlink control information coding/modulation section 932, a downlink reference signal generating section 933, a downlink transmission data generating section 934, and a downlink transmission data coding/modulation section 936. Also, the transmission section on the subordinate cell remote radio equipment (the cell 2) side has a mapping section 937, a precoding multiplication section 938, a precoding weight generating section 939, a downlink channel multiplexing section 940, IFFT sections 941a and 941b, CP adding sections 942a and 942b, transmission amplifiers 943a and 943b, and transmitting antennas 944a and 944b. Note that the centralized radio base station apparatus and the remote radio equipment of the subordinate cell are connected by, for example, optical fiber.

The downlink control information generating sections 901 and 931 each generate downlink control information in accordance with control by the user scheduling control section 922, and output that downlink control information to the downlink control information coding/modulation sections 902 and 932, respectively. The downlink control information coding/modulation sections 902 and 932 perform channel coding and data modulation for downlink control information and output the result to the mapping sections 907 and 937, respectively.

The downlink reference signal generating sections 903 and 933 generate downlink reference signals (CRS, CSI-RS, DM-RS) and output these downlink reference signals to the mapping sections 907 and 937, respectively. The downlink transmission data generation sections 904 and 934 generate downlink transmission data and output the downlink transmission data to the downlink transmission data coding/modulation sections 906 and 936, respectively.

The higher control information generating section 905 generates higher control information to be transmitted and received by higher layer signaling (for example, RRC signaling), and outputs the generated higher control information to the downlink transmission data coding/modulation section 906. For example, the higher control information generating section 905 generates higher control information that represents whether or not CoMP transmission is adopted, the transmission timing (cycle) of feedback information from the user terminal 10, and so on, which is necessary to switch the feedback method in the user terminal 10.

The downlink transmission data coding/modulation section 906 performs channel coding and data modulation with respect to the downlink transmission data and the higher control information, and outputs the results to the mapping section 907. The downlink transmission data coding/modulation section 936 performs channel coding and data modulation with respect to the downlink transmission data, and outputs the result to the mapping section 937.

The mapping sections 907 and 937 map the downlink control information, downlink reference signal, downlink transmission data and higher control information, and output these to the precoding multiplication sections 908 and 938, respectively. Also, the mapping sections 907 and 937 set the target resources as muting resource when it is necessary to cancel interference from other cells upon CQI measurement.

For example, when the feedback method according to the first mode is adopted and CoMP transmission is performed, in the resource block of the subject cell (the cell 1), the mapping section 907 sets resources corresponding to the CSI-RS of another cell (the cell 2) as muting resources and makes the transmission power of the target resources zero. In the resource block of the subject cell (the cell 2), the mapping section 937 sets resources corresponding to the CSI-RS of another cell (the cell 1) as muting resources and makes the transmission power of the target resources zero.

Also, when the feedback methods according to the second and third modes are adopted and CoMP transmission is performed, in the resource block of the subject cell (the cell 2), the mapping section 937 sets resources corresponding to the CSI-RS of another cell (the cell 1) as muting resources and makes the transmission power of the target resources zero.

The precoding weight generating sections 909 and 939 generate precoding weights based on the PMIs fed back from the user terminal 10, and output the precoding weights to the precoding multiplication sections 908 and 938, respectively. To be more specific, the precoding weight generating sections 909 and 939 each have a codebook and select a precoding weight corresponding to the PMI from the codebook. Note that the PMIs to be utilized in the precoding weight generating sections 909 and 939 are given from the control channel signal demodulation section 920.

The precoding multiplication sections 908 and 938 multiply transmission signals by the precoding weights. That is to say, the precoding multiplication sections 908 and 938 apply a phase shift and/or an amplitude shift, for each of the transmitting antennas 914a and 914b and the transmitting antennas 944a and 944b, based on the precoding weights provided from the precoding weight generating sections 909 and 939, respectively. The precoding multiplication sections 908 and 938 output the transmission signals, to which a phase shift and/or an amplitude shift has been applied, to the downlink channel multiplexing sections 910 and 940, respectively.

The downlink channel multiplexing sections 910 and 940 combines the downlink control information, downlink reference signal, higher control information and downlink transmission data, to which a phase shift and/or an amplitude shift has been applied, and generates transmission signals for each of the transmitting antennas 914a and 914b and the transmitting antennas 944a and 944b. The downlink channel multiplexing sections 910 and 940 output the transmission signals to the IFFT (Inverse Fast Fourier Transform) sections 911a and 911b and the IFFT sections 941a and 941b, respectively.

The IFFT sections 911a and 911b and the IFFT sections 941a and 941b perform an IFFT of the transmission signals, and output the transmission signals after the IFFT to the CP adding sections 912a and 912b and the CP adding sections 942a and 942b. The CP adding sections 912a and 912b and the CP adding sections 942a and 942b add CPs (Cyclic Prefixes) to the transmission signals after the IFFT, and output the transmission signals, to which CPs have been added, to the transmission amplifiers 913a and 913b and the transmission amplifiers 943a and 943b, respectively.

The transmission amplifiers 913a and 913b and the transmission amplifiers 943a and 943b amplify the transmission signals, to which CPs have been added. The amplified transmission signals are transmitted to the user terminal 10, from the transmitting antennas 914a and 914b and the transmitting antennas 944a and 944b, on the downlink, respectively.

The control channel demodulation section 920 demodulates the control channel signal reported from the user terminal 10 by the PUCCH, outputs the PMIs included in the control channel signal to the precoding weight generating sections 909 and 939, and outputs the CQIs to the received quality measurement section 921. Note that, when the CQIs are reported by the PUSCH, an uplink data channel demodulation section, which is not shown, demodulates the uplink transmission data, and output the CQIs included in the uplink transmission data to the received quality measurement section 921.

The received quality measurement section 921 calculates the SINRs, in accordance with the above-described calculation methods of the first to fourth modes, based on the CQIs reported from the control channel demodulation section 920 (or the uplink data channel demodulation section). The calculated SINRs are reported to the user scheduling control section 922. The user scheduling control section 922 executes scheduling control for the downlink control information of each cell, based on the SINRs. Also the SINRs are used to determine the modulation schemes and coding rates in the downlink control information coding/modulation sections 902 and 932 and the downlink transmission data coding/modulation sections 906 and 936.

For example, when the feedback method according to the first mode is adopted and CoMP transmission is performed, the received quality measurement section 921 calculates the SINRs according to formulas 7 and 8. On the other hand, when CoMP transmission is not executed, the SINRs are calculated according to formula 9. Similarly, when the feedback method according to the second mode is adopted and CoMP transmission is executed, the received quality measurement section 921 calculates the SINRs according to formulas 12 and 13. On the other hand, when CoMP transmission is not executed, the SINRs are calculated according to formula 14.

Furthermore, when the feedback method according to the third mode is adopted and CoMP transmission is executed, the received quality measurement section 921 calculates the SINRs according to formulas 17 and 18. On the other hand, when CoMP transmission is not executed, the SINRs are calculated according to formula 19. When the feedback method according to the fourth mode is adopted and CoMP transmission is executed, the received quality measurement section 921 calculates the SINRs according to formulas 22 and 23. On the other hand, when CoMP transmission is not executed, the SINRs are calculated according to formula 24.

Now, the function blocks of a radio base station apparatus having a different configuration from the radio base station apparatus shown in FIG. 11 will be described with reference to FIG. 12. The radio base station apparatus shown in FIG. 12 has an autonomous distributed control-type radio base station configuration. In the event of autonomous distributed control, a plurality of radio base station apparatuses each execute radio resource allocation control such as scheduling. In this case, the feedback information (CQI) is used as information that is necessary for radio resource allocation and so on in the user scheduling control sections 922 and 952 in each of a plurality of radio base station apparatuses.

Note that the function blocks of FIG. 12 primarily relate to the processing content of the baseband processing section 204 shown in FIG. 9. Also, the function blocks shown in FIG. 12 are simplified to explain the present invention, and assumed to have the configurations which a baseband processing section 204 should normally have. Also, function blocks in FIG. 12 that are the same as in FIG. 11 will be assigned the same codes as in FIG. 11, and their detailed descriptions will be omitted.

The transmission section on the cell 1 side has a downlink control information generating section 901, a downlink control information coding/modulation section 902, a downlink reference signal generating section 903, a downlink transmission data generating section 904, a higher control information generating section 905 and a downlink transmission data coding/modulation section 906, a mapping section 907, a precoding multiplication section 908, a precoding weight generating section 909, a downlink channel multiplexing section 910, IFFT sections 911a and 911b, CP adding sections 912a and 912b, transmission amplifiers 913a and 913b, transmitting antennas 914a and 914b, a control channel signal demodulation section 920, a received quality measurement section 921, a user scheduling control section 922, and an inter-cell control information transmitting/receiving section 923.

The transmission section on the cell 2 side similarly has a downlink control information generating section 931, a downlink control information coding/modulation section 932, a downlink reference signal generating section 933, a downlink transmission data generating section 934, a higher control information generating section 935, a downlink transmission data coding/modulation section 936, a mapping section 937, a precoding multiplication section 938, a precoding weight generating section 939, a downlink channel multiplexing section 940, IFFT sections 941a and 941b, CP adding sections 942a and 942b, transmission amplifiers 943a and 943b, transmitting antennas 944a and 944b, a control channel signal demodulation section 950, a received quality measurement section 951, a user scheduling control section 952, and an inter-cell control information transmitting/receiving section 953.

The functions of the higher control information generating section 935, control channel signal demodulation section 950, received quality measurement section 951, and user scheduling control section 952 provided in the transmission section of the cell 2 side are the same as the functions of the higher control information generating section 905, control channel signal demodulation section 920, received quality measurement section 921 and user scheduling control section 922 provided in the transmission section of the cell 1 side.

That is to say, the higher control information generating section 935 generates higher control information to be transmitted and received by higher layer signaling (for example, RRC signaling), and outputs the generated higher control information to the downlink transmission data coding/modulation section 936. The downlink transmission data coding/modulation section 936 performs channel coding and data modulation for the downlink transmission data and the higher control information, and output the results to the mapping section 937.

Also, the control channel demodulation section 950 demodulates the control channel signal reported from the user terminal 10 by the PUCCH, outputs the PMIs included in the control channel signal to the precoding weight generating section 939, and outputs the CQIs to the received quality measurement section 951. Note that, when the CQIs are reported by the PUSCH, an uplink data channel demodulation section, which is not shown, demodulates the uplink transmission data, and outputs the CQIs included in the uplink transmission data to the received quality measurement section 951.

Also, the received quality measurement section 951 calculates the SINRs based on the CQIs reported from the control channel demodulation section 950 (or the uplink data channel demodulation section). The calculated SINRs are reported to the user scheduling control section 952. The user scheduling control section 952 executes scheduling control for the downlink control information of the target cell, based on the SINRs. Also the SINRs are used to determine the modulation schemes and coding rates in the downlink control information coding/modulation section 932 and the downlink transmission data coding/modulation section 936.

The inter-cell control information transmitting/receiving sections 923 and 953 are connected by an X2 interface, and transmit and receive, with each other, the timing information, scheduling information and so on that are output from the user scheduling control sections 922 and 952. By this means, coordination between cells is made possible.

The function blocks of a user terminal will be described with reference to FIG. 13. Note that the function blocks of FIG. 13 primarily relate to the processing content of the baseband processing section 104 shown in FIG. 10. Also, the function blocks shown in FIG. 13 are simplified to explain the present invention, and assumed to have the configurations which a baseband processing section should normally have.

The receiving section of the user terminal has a CP removing section 1101, an FFT section 1102, a downlink channel demultiplexing section 1103, a downlink control information receiving section 1104, a downlink transmission data receiving section 1105, a channel estimation section 1106, the first CQI measurement section 1107, a second CQI measurement section 1108, and a PMI selection section 1109. The first CQI measurement section 1107 and the second CQI measurement section 1108 function as a channel state information generating section.

The transmission signal transmitted from the radio base station apparatus eNB is received by the transmitting/receiving antenna 101 shown in FIG. 10 and output to the CP removing section 1101. The CP removing section 1101 removes the CPs from the received signal and outputs the result to the FFT section 1102. The FFT section 1102 performs a fast Fourier transform (FFT) of the signal, from which the CPs have been removed, and converts the time domain signal into a frequency domain signal. The FFT section 1102 outputs the signal having been converted into a frequency domain signal to the downlink channel demultiplexing section 1103. The downlink channel demultiplexing section 1103 demultiplexes the downlink channel signal into downlink control information, downlink transmission data, higher control information and downlink reference signal. The downlink channel demultiplexing section 1103 outputs the downlink control information to the downlink control information receiving section 1104, outputs the downlink transmission data and the higher control information to the downlink transmission data receiving section 1105, and outputs the downlink reference signal to the channel estimation section 1106.

The downlink control information receiving section 1104 demodulates the downlink control information, and outputs the demodulated control information to the downlink transmission data receiving section 1105. The downlink transmission data receiving section 1105 demodulates the downlink transmission data using the control information. Also, the downlink transmission data receiving section 1105 demodulates the higher control information included in the downlink transmission data and reports the result to the first CQI measurement section 1107 and the second CQI measurement section 1108. The channel estimation section 1106 estimates the channel state using the downlink reference signal, and outputs the estimated channel state to the first CQI measurement section 1107, the second CQI measurement section 1108 and the PMI selection section 1109.

The first CQI measurement section 1107 measures CQIs, from the channel state reported from the channel estimation section 1106, based on the higher control information reported from the downlink transmission data receiving section 1105. To be more specific, when it is reported, by higher control information, that CoMP transmission is not adopted, CQIs are measured in the mode defined in the LTE system. The CQIs measured in the first CQI measurement section 1107 are reported to the radio base station apparatus 20 as feedback information.

The second CQI measurement section 1108 measures CQIs, from the channel state reported from the channel estimation section 1106, based on the higher control information reported from the downlink transmission data receiving section 1105. To be more specific, when it is reported, by higher control information, that CoMP transmission is adopted, CQIs are measured in the above-described first to fourth modes.

For example, when the feedback method according to the first mode is adopted, the second CQI measurement section 1108 calculates CQIs according to formulas 5 and 6. Similarly, when the feedback method according to the second mode is adopted, the second CQI measurement section 1108 calculates CQIs according to formulas 10 and 11. Furthermore, when the feedback method according to the third mode is adopted, the second CQI measurement section 1108 calculates CQIs according to formulas 15 and 16. When the feedback method according to the fourth mode is adopted, the second CQI measurement section 1108 calculates CQIs according to formulas 20 and 21.

The CQIs measured in the second CQI measurement section 1108 are reported to the radio base station apparatus 20 as feedback information. Note that the CQIs measured in the second CQI measurement section 1108 are transmitted, in a predetermined cycle or at timing (or cycle) reported by higher control information, by the uplink data channel (PUSCH) or the uplink control channel (PUCCH).

The PMI selection section 1109 selects PMIs, using a codebook, from the channel state reported from the channel estimation section 1106. The PMIs selected in the PMI selection section 1109 are reported to the radio base station apparatus 20 as feedback information.

In the radio communication system of the above configuration, first, the radio base station apparatus 20 transmits a reference signal (CSI-RS). When CoMP transmission is adopted, the radio base station apparatus 20 executes muting as appropriate and transmits CSI-RSs in a mode to match the CQI measurement. To be more specific, when the above-described first to third modes are adopted, the radio base station apparatus 20 executes muting.

Next, in the user terminal 10, the first CQI measurement section 1107 or the second CQI measurement section 1108 of the user terminal 10 measure CQIs, based on the reporting by the higher control information. That is to say, when it is reported that CoMP transmission is not adopted, CQIs are measured in the first CQI measurement section 1107, in the mode defined in the LTE system, and, when it is reported that CoMP transmission is adopted, CQIs are measured in the second CQI measurement section 1108, in the above-described first to fourth modes.

After that, the user terminal 10 reports the measured CQIs to the radio base station apparatus 20. The CQIs are transmitted in a predetermined cycle or at timing (or cycle) reported by higher control information, by the uplink data channel (PUSCH) or the uplink control channel (PUCCH). The radio base station apparatus 20 calculates SINRs based on the CQIs reported from the user terminal 10, determines the modulation scheme and coding rate based on the SINRs, and also executes scheduling control.

As described above, with the feedback methods according to the first to third modes, the user terminal 10 generates a plurality of pieces of channel state information including channel state information, in which interference from the serving cell and/or a coordinated cell is cancelled, when a plurality of radio base station apparatuses 20 are coordinated and perform transmission, so that it is possible to include information that is necessary to calculate received quality upon CoMP transmission, and feed back channel state information, from which adequate received quality can be calculated upon CoMP transmission.

Also, with the feedback method according to the fourth mode, the user terminal 10 generates a plurality of pieces of channel state information, including channel state information that is represented by the ratio of received signal components from the serving cell and received signal components from a coordinated cell when a plurality of radio base station apparatuses 20 are coordinated and perform transmission, so that it is possible to include information that is necessary to calculate received quality upon CoMP transmission, and feed back channel state information, from which adequate received quality can be calculated upon CoMP transmission.

Note that the present invention is not limited to the descriptions contained herein, and can be implemented with various changes. For example, although modes have been shown herein as examples of cancelling interference of other cells by using muting, interference may be cancelled by using other methods as well. Also, for example, the relationships of connection between elements, the functions of elements and so on shown herein can be implemented with various changes. Also, the configuration shown herein can be implemented in various combinations. Besides, the present invention can be changed with various changes without departing from the scope of the present invention.

## Claims

1. A radio communication system (1) comprising a plurality of radio base station apparatuses (20A, 20B) and a user terminal (10A, 10B) that is configured to communicate with the plurality of radio base station apparatuses (20A, 20B), wherein:

    the radio base station apparatuses (20A, 20B) comprise:

        a transmission section (201a, 201b) configured to transmit a reference signal for channel state measurement to the user terminal (10A, 10B); and
        a receiving section (201a, 201b) configured to receive channel state information generated in the user terminal (10A, 10B) based on the reference signal; and

    the user terminal (10A, 10B) comprises:

        a channel state information generating section configured to generate a plurality of pieces of channel state information, including channel state information from which interference from a coordinated cell is cancelled, when the plurality of radio base station apparatuses (20A, 20B) coordinate and perform transmission; and a transmission section configured to transmit the plurality of pieces of channel state information to at least a radio base station apparatus amongst said plurality of radio station apparatuses (20A, 20B);

and wherein the radio base station apparatus further comprises a calculating section (921) configured to calculate a Signal to Interference and Noise Ratio, SINR, from the plurality of pieces of channel state information received, **characterized by** that the calculation is based on transmission weights by which signals transmitted from the plurality of base station apparatuses are multiplied when the plurality of base station apparatuses coordinate and perform transmission, when coordinated multiple-point transmission is adopted.

2. The radio communication system (1) according to claim 1, wherein the channel state information generating section generates channel state information, from which interference from a serving cell is cancelled, when the plurality of radio base station apparatuses (20A, 20B) coordinate and perform transmission.

3. The radio communication system (1) according to one of claim 1 and claim 2, wherein the radio base station apparatus (20A, 20B) comprises a mapping section (907) configured to set transmission power of a radio resource for a subject cell, corresponding to a radio resource where a reference signal for channel state measurement for another cell is allocated, zero transmission power.

4. The radio communication system (1) according to claim 2, wherein the channel state information generating section generates channel state information that is determined from following formulas 5 and 6, where a received signal component from a serving cell is $S_1$, a received signal component from the coordinated cell is $S_2$, an interference component from a cell other than the serving cell and the coordinated cell is I, and a noise component is N:
[1]

$$FB_A = \frac{S_1}{I + N} \quad \text{- Formula 5}$$

[2]

$$FB_B = \frac{S_2}{I + N} \quad \text{- Formula 6}$$

5. The radio communication system (1) according to claim 1, wherein the channel state information generating section generates channel state information that is determined from following formulas 10 and 11, where a received signal component from a serving cell is $S_1$, a received signal component from the coordinated cell is $S_2$, an interference component from a cell other than the serving cell and the coordinated cell is I, and a noise component is N:
[3]

$$FB_C = \frac{S_1}{S_2 + I + N} \quad \text{- Formula 10}$$

[4]

$$FB_D = \frac{S_1}{I + N} \quad \text{- Formula 11}$$

6. The radio communication system (1) according to claim 1, wherein the channel state information generating section generates channel state information that is represented by a ratio of a received signal component from a serving cell and a received signal component from the coordinated cell.

**7.** The radio communication system (1) according to claim 6, wherein the channel state information generating section generates channel state information that is determined from following formulas 15 and 16, where the received signal component from the serving cell is $S_1$, the received signal component from the coordinated cell is $S_2$, an interference component from a cell other than the serving cell and the coordinated cell is I, and a noise component is N:
[5]

$$FB_E = \frac{S_1}{I + N} \quad \text{- Formula 15}$$

[6]

$$FB_F = \frac{S_1}{S_2} \quad \text{- Formula 16}$$

**8.** The radio communication system (1) according to claim 1, wherein the channel state information generating section generates channel state information that is determined from following formulas 1 and 2 when the plurality of radio base station apparatuses (20A, 20B) are not coordinated and do not perform transmission, where the received signal component from the serving cell is $S_1$, the received signal component from the coordinated cell is $S_2$, an interference component from a cell other than the serving cell and the coordinated cell is I, and a noise component is N:
[9]

$$FB_1 = \frac{S_1}{S_2 + I + N} \quad \text{- Formula 1}$$

[10]

$$FB_2 = \frac{S_2}{S_1 + I + N} \quad \text{- Formula 2}$$

**9.** The radio communication system (1) according to claim 8, wherein the channel state information generating section switches the channel state information to generate, based on a higher control signal which reports whether or not the plurality of radio base station apparatuses (20A, 20B) coordinate and perform transmission.

**10.** The radio communication system (1) according to one of claim 1, wherein the plurality of pieces of channel state information are transmitted by an uplink data channel.

**11.** The radio communication system (1) according to one of claim 1, wherein the plurality of pieces of channel state information are transmitted by an uplink control channel.

**12.** The radio communication system (1) according to claim 11, wherein the plurality of pieces of channel state information are transmitted in a same subframe.

**13.** The radio communication system (1) according to claim 11, wherein the plurality of pieces of channel state information are transmitted in different subframes.

**14.** The radio communication system (1) according to one of claim 1, wherein the plurality of pieces of channel state information are transmitted in a same cycle.

**15.** The radio communication system (1) according to one of claim 1, wherein the plurality of pieces of channel state information are transmitted in different cycles.

**16.** A method of feeding back channel state information from a user terminal (10A, 10B) when a plurality of radio base station apparatuses (20A, 20B) coordinate and perform transmission, the method comprising the steps in which:

a radio base station apparatus (20A, 20B) transmits a reference signal for channel state measurement to the user terminal (10A, 10B);
the user terminal generates a plurality of pieces of channel state information, including channel state information from which interference from a coordinated cell is cancelled, based on the reference signal transmitted from the radio base station apparatus; and
the user terminal (10A, 10B) transmits the plurality of pieces of channel state information to the radio base station apparatus (20A, 20B); and wherein the radio base station apparatus further comprises a calculating section configured to calculate a Signal to Interference and Noise Ratio, SINR, from the plurality of pieces of channel state information received,

**characterized by** that the calculation is based on transmission weights by which signals transmitted from the plurality of base station apparatuses are multiplied when the plurality of base station apparatuses coordinate and perform transmission, when coordinated multiple-point transmission is adopted.

**17.** A radio base station apparatus (20A, 20B) which is configured to be able to perform coordinated transmission with another radio base station apparatus (20A, 20B), for a user terminal (10A, 10B), the radio base station apparatus (20A, 20B) comprising:

a transmission section configured to transmit a reference signal for channel state measurement to the user terminal (10A, 10B); and
a receiving section configured to, upon coordinating with the other radio base station apparatus (20A, 20B) and performing transmission, receive a plurality of pieces of channel state information, which is generated based on the reference signal and which includes channel state information from which interference from a coordinated cell is cancelled, from the user terminal (10A, 10B);

and wherein the radio base station apparatus further comprises a calculating section configured to calculate a Signal to Interference and Noise Ratio, SINR, from the plurality of pieces of channel state information received,
**characterized by** that the calculation is based on transmission weights by which signals transmitted from the plurality of base station apparatuses are multiplied when the plurality of base station apparatuses coordinate and perform transmission, when coordinated multiple-point transmission is adopted.

## Patentansprüche

**1.** Funkkommunikationssystem (1), das eine Mehrzahl von Funkbasisstationsvorrichtungen (20A, 20B) und ein Benutzerendgerät (10A, 10B) umfasst, das dazu konfiguriert ist, mit der Mehrzahl von Funkbasisstationsvorrichtungen (20A, 20B) zu kommunizieren, wobei:

die Funkbasisstationsvorrichtungen (20A, 20B) umfassen:

einen Sendeabschnitt (201a, 201b), der dazu konfiguriert ist, ein Referenzsignal zur Kanalzustandsmessung an das Benutzerendgerät (10A, 10B) zu übertragen; und
einen Empfangsabschnitt (201a, 201b), der dazu konfiguriert ist, Kanalzustandsinformationen zu empfangen, die in dem Benutzerendgerät (10A, 10B) erzeugt wurden, auf Basis des Referenzsignals; und

wobei das Benutzerendgerät (10A, 10B) umfasst:

einen Kanalzustandsinformations-Erzeugungsabschnitt, der dazu konfiguriert ist, eine Mehrzahl von Kanalzustandsinformationsstücken zu erzeugen, inklusive Kanalzustandsinformationen, aus welchen Interferenz von einer koordinierten Zelle aufgehoben wurde, wenn die Mehrzahl von Funkbasisstationsvorrichtungen (20A, 20B) eine Übertragung koordiniert und durchführt; und
einen Sendeabschnitt, der dazu konfiguriert ist, die Mehrzahl von Kanalzustandsinformationsstücken an mindestens eine Funkbasisstationsvorrichtung unter der Mehrzahl von Funkstationsvorrichtungen (20A, 20B) zu übertragen;

und wobei die Funkbasisstationsvorrichtung ferner einen Berechnungsabschnitt (921) umfasst, der dazu konfiguriert ist, ein Signal-zu-Interferenz-und-Rauschverhältnis, SINR, aus der Mehrzahl von empfangenen Kanalzustandsinformationsstücken zu berechnen,
**dadurch gekennzeichnet, dass** die Berechnung auf Übertragungsgewichten basiert ist, durch welche Signale, die von der Mehrzahl von Basisstationsvorrichtungen übertragen werden, multipliziert werden, wenn die Mehrzahl von Basisstationsvorrichtungen die Übertragung koordiniert und durchführt, wenn eine koordinierte Mehrpunktübertragung angewendet wird.

**2.** Funkkommunikationssystem (1) nach Anspruch 1, wobei der Kanalzustandsinformations-Erzeugungsabschnitt Kanalzustandsinformationen erzeugt, aus welchen Interferenz von einer dienenden Zelle aufgehoben wurde, wenn die Mehrzahl von Funkbasisstationsvorrichtungen (20A, 20B) eine Übertragung koordiniert und durchführt.

**3.** Funkkommunikationssystem (1) nach einem von Anspruch 1 und Anspruch 2, wobei die Funkbasisstationsvorrichtung (20A, 20B) einen Abbildungsabschnitt (907) umfasst, der dazu konfiguriert ist, eine Übertragungsleistung einer Funkressource für eine Subjektzelle, entsprechend einer Funkressource, wo ein Referenzsignal zur Kanalzustandsmessung für eine andere Zelle zugeordnet ist, auf eine Null-Übertragungsleistung einzustellen.

**4.** Funkkommunikationssystem (1) nach Anspruch 2, wobei der Kanalzustandsinformations-Erzeugungsabschnitt Kanalzustandsinformationen erzeugt, die aus den folgenden Formeln 5 und 6 bestimmt werden, wobei eine empfangene Signalkomponente von einer dienenden Zelle $S_1$ ist, eine empfangene Signalkomponente von der koordinierten Zelle $S_2$ ist, eine Interferenzkomponente von einer Zelle, die sich von der dienenden Zelle und der koordinierten Zelle unterscheidet, I ist, und eine Rauschkomponente N ist:
[1]

$$FB_{\mathrm{A}} = \frac{S_1}{I + N} \quad \text{- Formel 5}$$

[2]

$$FB_{\mathrm{B}} = \frac{S_2}{I + N} \quad \text{- Formel 6}$$

**5.** Funkkommunikationssystem (1) nach Anspruch 1, wobei
der Kanalzustandsinformations-Erzeugungsabschnitt Kanalzustandsinformationen erzeugt, die aus den folgenden Formeln 10 und 11, bestimmt werden, wobei eine empfangene Signalkomponente von einer dienenden Zelle $S_1$ ist, eine empfangene Signalkomponente von der koordinierten Zelle $S_2$ ist, eine Interferenzkomponente von einer Zelle, die sich von der dienenden Zelle und der koordinierten Zelle unterscheidet, I ist, und eine Rauschkomponente N ist:
[3]

$$FB_{\mathrm{C}} = \frac{S_1}{S_2 + I + N} \quad \text{- Formel 10}$$

[4]

$$FB_{\mathrm{D}} = \frac{S_1}{I + N} \quad \text{- Formel 11}$$

**6.** Funkkommunikationssystem (1) nach Anspruch 1, wobei der Kanalzustandsinformations-Erzeugungsabschnitt Kanalzustandsinformationen erzeugt, die durch ein Verhältnis einer empfangenen Signalkomponente von einer dienenden Zelle und einer empfangenen Signalkomponente von der koordinierten Zelle dargestellt werden.

**7.** Funkkommunikationssystem (1) nach Anspruch 6, wobei der Kanalzustandsinformations-Erzeugungsabschnitt Kanalzustandsinformationen erzeugt, die aus den folgenden Formeln 15 und 16 bestimmt werden, wobei die empfangene Signalkomponente von der dienenden Zelle $S_1$ ist, die empfangene Signalkomponente von der koordinierten Zelle $S_2$ ist, eine Interferenzkomponente von einer Zelle, die sich von der dienenden Zelle und der koordinierten Zelle unterscheidet, I ist, und eine Rauschkomponente N ist:
[5]

$$FB_E = \frac{S_1}{I+N} \quad \text{- Formel 15}$$

[6]

$$FB_F = \frac{S_1}{S_2} \quad \text{- Formel 16}$$

**8.** Funkkommunikationssystem (1) nach Anspruch 1, wobei der Kanalzustandsinformations-Erzeugungsabschnitt Kanalzustandsinformationen erzeugt, die aus den folgenden Formeln 1 und 2 bestimmt werden, wenn die Mehrzahl von Funkbasisstationsvorrichtungen (20A, 20B) nicht koordiniert ist und keine Übertragung durchführt, wobei die empfangene Signalkomponente von der dienenden Zelle $S_1$ ist, die empfangene Signalkomponente von der koordinierten Zelle $S_2$ ist, eine Interferenzkomponente von einer Zelle, die sich von der dienenden Zelle und der koordinierten Zelle unterscheidet, I ist, und eine Rauschkomponente N ist:
[9]

$$FB_1 = \frac{S_1}{S_2+I+N} \quad \text{- Formel 1}$$

[10]

$$FB_2 = \frac{S_2}{S_1+I+N} \quad \text{- Formel 2}$$

**9.** Funkkommunikationssystem (1) nach Anspruch 8, wobei der Kanalzustandsinformations-Erzeugungsabschnitt die zu erzeugenden Kanalzustandsinformationen auf Basis eines höheren Steuersignals umschaltet, das berichtet, ob oder ob nicht die Mehrzahl von Funkbasisstationsvorrichtungen (20A, 20B) eine Übertragung koordiniert und durchführt.

**10.** Funkkommunikationssystem (1) nach einem von Anspruch 1, wobei die Mehrzahl von Kanalzustandsinformationsstücken mittels eines Uplink-Datenkanals übertragen wird.

**11.** Funkkommunikationssystem (1) nach einem von Anspruch 1, wobei die Mehrzahl von Kanalzustandsinformationsstücken mittels eines Uplink-Steuerkanals übertragen wird.

**12.** Funkkommunikationssystem (1) nach Anspruch 11, wobei die Mehrzahl von Kanalzustandsinformationsstücken in einem gleichen Subframe übertragen wird.

**13.** Funkkommunikationssystem (1) nach Anspruch 11, wobei die Mehrzahl von Kanalzustandsinformationsstücken in verschiedenen Subframes übertragen wird.

**14.** Funkkommunikationssystem (1) nach einem von Anspruch 1, wobei die Mehrzahl von Kanalzustandsinformationsstücken in einem gleichen Zyklus übertragen wird.

**15.** Funkkommunikationssystem (1) nach einem von Anspruch 1, wobei die Mehrzahl von Kanalzustandsinformationsstücken in verschiedenen Zyklen übertragen wird.

**16.** Verfahren zum Rückführen von Kanalzustandsinformationen von einem Benutzerendgerät (10A, 10B), wenn eine Mehrzahl von Funkbasisstationsvorrichtungen (20A, 20B) eine Übertragung koordiniert und durchführt, wobei das Verfahren die Schritte umfasst, in welchen:

eine Funkbasisstationsvorrichtung (20A, 20B) ein Referenzsignal zur Kanalzustandsmessung an das Benutzerendgerät (10A, 10B) überträgt;
das Benutzerendgerät eine Mehrzahl von Kanalzustandsinformationsstücken erzeugt, inklusive Kanalzustandsinformationen, aus welchen Interferenz von einer koordinierten Zelle aufgehoben wurde, auf Basis des Referenzsignals, das von der Funkbasisstationsvorrichtung übertragen wurde; und
das Benutzerendgerät (10A, 10B) die Mehrzahl von Kanalzustandsinformationsstücken an die Funkbasisstationsvorrichtung (20A, 20B) überträgt;
und wobei die Funkbasisstationsvorrichtung ferner einen Berechnungsabschnitt umfasst, der dazu konfiguriert ist, ein Signal-zu-Interferenz-und-Rauschverhältnis, SINR, aus der Mehrzahl von empfangenen Kanalzustandsinformationsstücken zu berechnen,
**dadurch gekennzeichnet, dass** die Berechnung auf Übertragungsgewichten basiert ist, durch welche Signale, die von der Mehrzahl von Basisstationsvorrichtungen übertragen werden, multipliziert werden, wenn die Mehrzahl von Basisstationsvorrichtungen die Übertragung koordiniert und durchführt, wenn eine koordinierte Mehrpunktübertragung angewendet wird.

**17.** Funkbasisstationsvorrichtung (20A, 20B), die dazu konfiguriert ist, dazu imstande zu sein, eine koordinierte Übertragung mit einer weiteren Funkbasisstationsvorrichtung (20A, 20B) durchzuführen, für ein Benutzerendgerät (10A, 10B), die Funkbasisstationsvorrichtung (20A, 20B) umfassend:

einen Sendeabschnitt, der dazu konfiguriert ist, ein Referenzsignal zur Kanalzustandsmessung an das Benutzerendgerät (10A, 10B) zu übertragen; und
einen Empfangsabschnitt, der dazu konfiguriert ist, auf das Koordinieren mit der weiteren Funkbasisstationsvorrichtung (20A, 20B) und das Durchführen der Übertragung hin, eine Mehrzahl von Kanalzustandsinformationsstücken, die auf Basis des Referenzsignals erzeugt werden und die Kanalzustandsinformationen enthalten, aus welchen Interferenz von einer koordinierten Zelle aufgehoben wurde, von dem Benutzerendgerät (10A, 10B) zu empfangen;
und wobei die Funkbasisstationsvorrichtung ferner einen Berechnungsabschnitt umfasst, der dazu konfiguriert ist, ein Signal-zu-Interferenz-und-Rauschverhältnis, SINR, aus der Mehrzahl von empfangenen Kanalzustandsinformationsstücken zu berechnen,
**dadurch gekennzeichnet, dass** die Berechnung auf Übertragungsgewichten basiert ist, durch welche Signale, die von der Mehrzahl von Basisstationsvorrichtungen übertragen werden, multipliziert werden, wenn die Mehrzahl von Basisstationsvorrichtungen die Übertragung koordiniert und durchführt, wenn eine koordinierte Mehrpunktübertragung angewendet wird.

## Revendications

**1.** Système de radiocommunication (1) comprenant une pluralité d'appareils formant station de base radio (20A, 20B) et un terminal utilisateur (10A, 10B) qui est configuré pour communiquer avec la pluralité d'appareils formant station de base radio (20A, 20B), dans lequel :

les appareils formant station de base radio (20A, 20B) comprennent :

une section d'émission (201a, 201b) configurée pour émettre un signal de référence pour mesure d'état de canal vers le terminal utilisateur (10A, 10B) ; et
une section de réception (201a, 201b) configurée pour recevoir des informations d'état de canal produites dans le terminal utilisateur (10A, 10B) sur la base du signal de référence ; et

le terminal utilisateur (10A, 10B) comprend :

une section de production d'informations d'état de canal configurée pour produire une pluralité de morceaux d'informations d'état de canal, incluant des informations d'état de canal dont une interférence provenant d'une cellule coordonnée est annulée, lorsque la pluralité d'appareils formant station de base radio (20A, 20B) coordonne et effectue une émission ; et
une section d'émission configurée pour émettre la pluralité de morceaux d'informations d'état de canal vers au moins un appareil formant station de base radio parmi ladite pluralité d'appareils formant station radio (20A, 20B) ;

et dans lequel l'appareil formant station de base radio comprend en outre une section de calcul (921) configurée pour calculer un Rapport Signal sur interférence et Bruit, SINR, à partir de la pluralité de morceaux d'informations d'état de canal reçus,
**caractérisé en ce que** le calcul est basé sur des pondérations d'émission par lesquelles des signaux émis en provenance de la pluralité d'appareils formant station de base sont multipliés lorsque la pluralité d'appareils formant station de base coordonne et effectue une émission, quand une émission multipoint coordonnée est adoptée.

2. Système de radiocommunication (1) selon la revendication 1, dans lequel la section de production d'informations d'état de canal produit des informations d'état de canal, dont une interférence provenant d'une cellule servante est annulée, lorsque la pluralité d'appareils formant station de base radio (20A, 20B) coordonne et effectue une émission.

3. Système de radiocommunication (1) selon l'une de la revendication 1 et de la revendication 2, dans lequel l'appareil formant station de base radio (20A, 20B) comprend une section de mise en correspondance (907) configurée pour fixer une puissance d'émission d'une ressource radio pour une cellule sujette, correspondant à une ressource radio où un signal de référence pour la mesure d'état de canal pour une autre cellule est attribué, à une puissance d'émission nulle.

4. Système de radiocommunication (1) selon la revendication 2, dans lequel la section de production d'informations d'état de canal produit des informations d'état de canal qui sont déterminées à partir des formules 5 et 6 suivantes, où une composante de signal reçu en provenance d'une cellule servante est $S_1$, une composante de signal reçu en provenance de la cellule coordonnée est $S_2$, une composante d'interférence en provenance d'une cellule autre que la cellule servante et la cellule coordonnée est I, et une composante de bruit est N :
[1]

- Formule 5

$$FB_A = \frac{S_1}{I + N}$$

[2]

- Formule 6

$$FB_B = \frac{S_2}{I + N}$$

5. Système de radiocommunication (1) selon la revendication 1, dans lequel la section de production d'informations d'état de canal produit des informations d'état de canal qui sont déterminées à partir des formules 10 et 11 suivantes, où une composante de signal reçu en provenance d'une cellule servante est $S_1$, une composante de signal reçu en provenance de la cellule coordonnée est $S_2$, une composante d'interférence en provenance d'une cellule autre que la cellule servante et la cellule coordonnée est I, et une composante de bruit est N :
[3]

- Formule 10

$$FB_C = \frac{S_1}{S_2 + I + N}$$

[4]

- Formule 11

$$FB_D = \frac{S_1}{I + N}$$

**6.** Système de radiocommunication (1) selon la revendication 1, dans lequel la section de production d'informations d'état de canal produit des informations d'état de canal qui sont représentées par un rapport d'une composante de signal reçu en provenance d'une cellule servante et d'une composante de signal reçu en provenance de la cellule coordonnée.

**7.** Système de radiocommunication (1) selon la revendication 6, dans lequel la section de production d'informations d'état de canal produit des informations d'état de canal qui sont déterminées à partir des formules 15 et 16 suivantes, où la composante de signal reçu en provenance de la cellule servante est $S_1$, la composante de signal reçu en provenance de la cellule coordonnée est $S_2$, une composante d'interférence en provenance d'une cellule autre que la cellule servante et la cellule coordonnée est I, et une composante de bruit est N :
[5]

- Formule 15

$$FB_E = \frac{S_1}{I + N}$$

- Formule 16

$$FB_F = \frac{S_1}{S_2}$$

**8.** Système de radiocommunication (1) selon la revendication 1, dans lequel la section de production d'informations d'état de canal produit des informations d'état de canal qui sont déterminées à partir des formules 1 et 2 suivantes quand la pluralité d'appareils formant station de base radio (20A, 20B) n'est pas coordonnée et n'effectue pas d'émission, où la composante de signal reçu en provenance de la cellule servante est $S_1$, la composante de signal reçu en provenance de la cellule coordonnée est $S_2$, une composante d'interférence en provenance d'une cellule autre que la cellule servante et la cellule coordonnée est I, et une composante de bruit est N :
[9]

- Formule 1

$$FB_1 = \frac{S_1}{S_2 + I + N}$$

[10]

- Formule 2

$$FB_2 = \frac{S_2}{S_1 + I + N}$$

**9.** Système de radiocommunication (1) selon la revendication 8, dans lequel la section de production d'informations d'état de canal commute les informations d'état de canal pour produire, sur la base d'un signal de commande supérieur qui annonce si la pluralité d'appareils formant station de base radio (20A, 20B) coordonne et effectue ou non une émission.

**10.** Système de radiocommunication (1) selon une de la revendication 1, dans lequel la pluralité de morceaux d'informations d'état de canal est émise par un canal de données en liaison montante.
[6]

**11.** Système de radiocommunication (1) selon une de la revendication 1, dans lequel la pluralité de morceaux d'informations d'état de canal est émise par un canal de commande en liaison montante.

**12.** Système de radiocommunication (1) selon la revendication 11, dans lequel la pluralité de morceaux d'informations d'état de canal est émise dans une même sous-trame.

**13.** Système de radiocommunication (1) selon la revendication 11, dans lequel la pluralité de morceaux d'informations d'état de canal est émise dans des sous-trames différentes.

**14.** Système de radiocommunication (1) selon une de la revendication 1, dans lequel la pluralité de morceaux d'informations d'état de canal est émise dans un même cycle.

**15.** Système de radiocommunication (1) selon une de la revendication 1, dans lequel la pluralité de morceaux d'informations d'état de canal est émise dans des cycles différents.

**16.** Procédé de rétroaction d'informations d'état de canal à partir d'un terminal utilisateur (10A, 10B) quand une pluralité d'appareils formant station de base radio (20A, 20B) coordonnent et effectuent une émission, le procédé comprenant les étapes dans lesquelles :

un appareil formant station de base radio (20A, 20B) émet un signal de référence pour une mesure d'état de canal vers le terminal utilisateur (10A, 10B) ;
le terminal utilisateur produit une pluralité de morceaux d'informations d'état de canal, incluant des informations d'état de canal dont une interférence en provenance d'une cellule coordonnée est annulée, sur la base du signal de référence émis en provenance de l'appareil formant station de base radio ; et
le terminal utilisateur (10A, 10B) émet la pluralité de morceaux d'informations d'état de canal vers l'appareil formant station de base radio (20A, 20B) ; et dans lequel l'appareil formant station de base radio comprend en outre une section de calcul configurée pour calculer un Rapport Signal sur interférence et Bruit, SINR, à partir de la pluralité de morceaux d'informations d'état de canal reçus,
**caractérisé en ce que** le calcul est basé sur des pondérations d'émission par lesquelles des signaux émis en provenance de la pluralité d'appareils formant station de base sont multipliés quand la pluralité d'appareils formant station de base coordonne et effectue une émission, quand une émission multipoint coordonnée est adoptée.

**17.** Appareil formant station de base radio (20A, 20B) qui est configuré pour être susceptible d'effectuer une émission coordonnée avec un autre appareil formant station de base radio (20A, 20B), pour un terminal utilisateur (10A, 10B), l'appareil formant station de base radio (20A, 20B) comprenant :

une section d'émission configurée pour émettre un signal de référence pour la mesure d'état de canal vers le terminal utilisateur (10A, 10B) ; et
une section de réception configurée pour, lors de la coordination avec l'autre appareil formant station de base radio (20A, 20B) et de la réalisation d'une émission, recevoir une pluralité de morceaux d'informations d'état de canal, qui sont produites sur la base du signal de référence et qui incluent des informations d'état de canal dont une interférence d'une cellule coordonnée est annulée, en provenance du terminal utilisateur (10A, 10B); et dans lequel l'appareil formant station de base radio comprend en outre une section de calcul configurée pour calculer un Rapport Signal sur interférence et Bruit, SINR, à partir de la pluralité de morceaux d'informations d'état de canal reçus,

**caractérisé en ce que** le calcul est basé sur des pondérations d'émission par lesquelles des signaux émis en provenance de la pluralité d'appareils formant station de base sont multipliés lorsque la pluralité d'appareils formant station de base coordonne et effectue une émission, quand une émission multipoint coordonnée est adoptée.

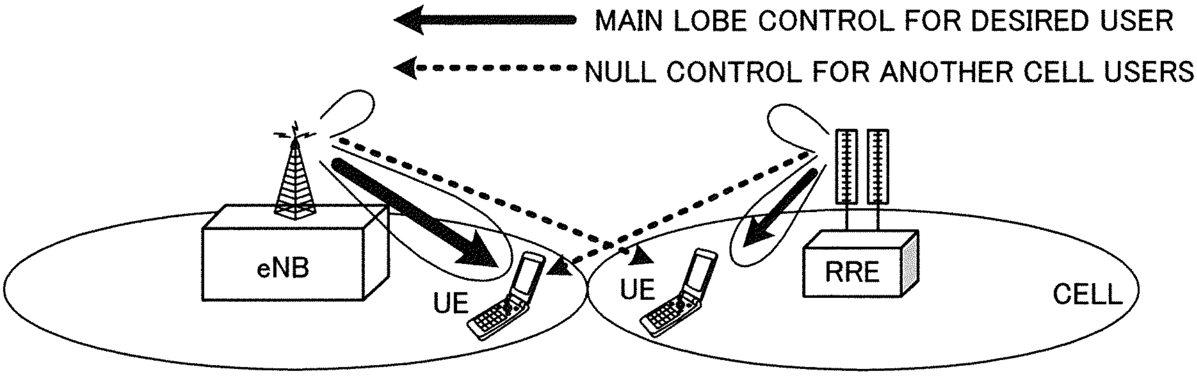


FIG. 1A

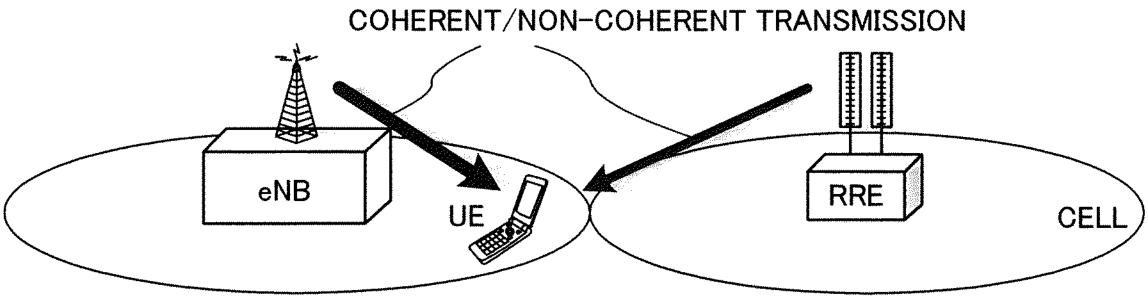


FIG. 1B

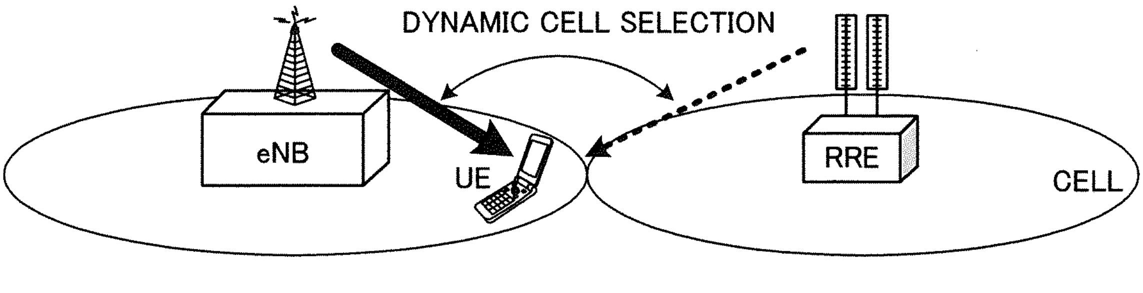


FIG. 1C

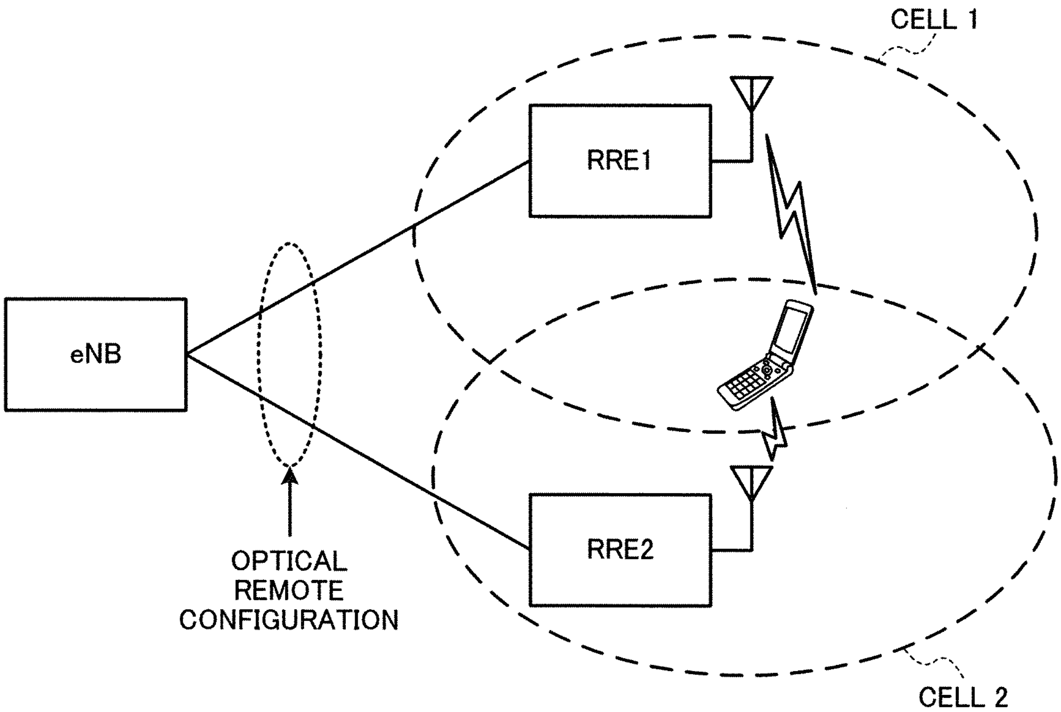
CELL 1
RRE1
eNB
OPTICAL
REMOTE
CONFIGURATION
RRE2
CELL 2

FIG. 2A

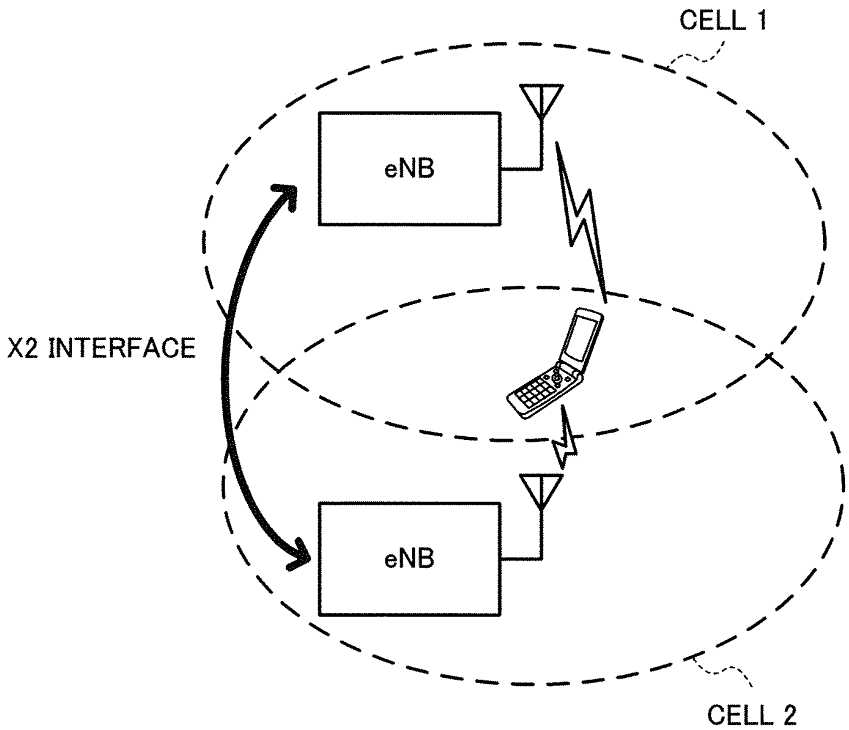
CELL 1
eNB
X2 INTERFACE
eNB
CELL 2

FIG. 2B

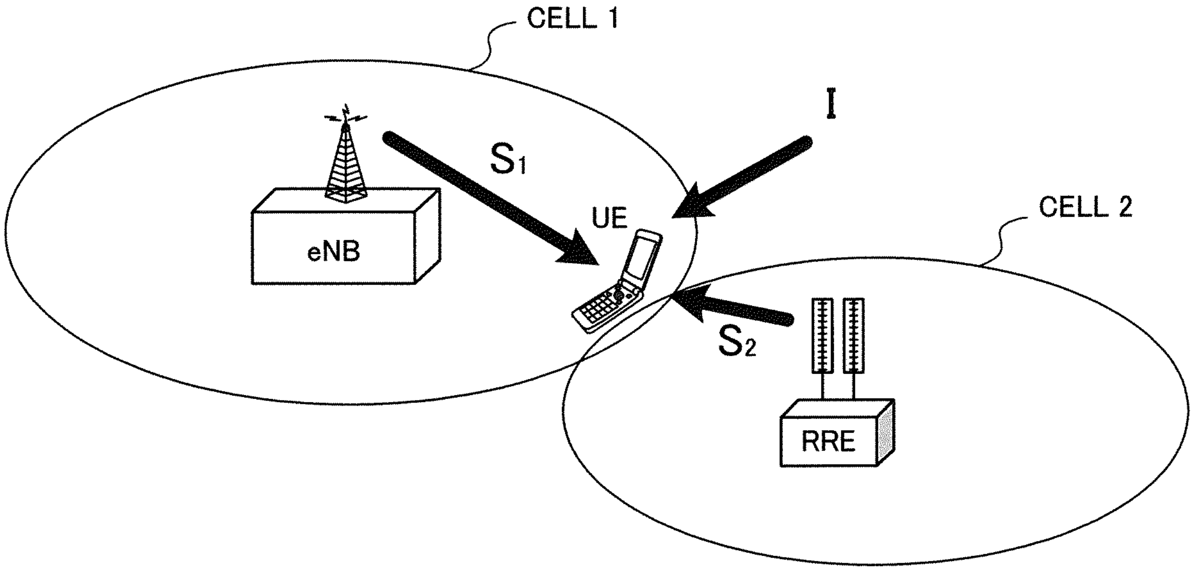


FIG. 3

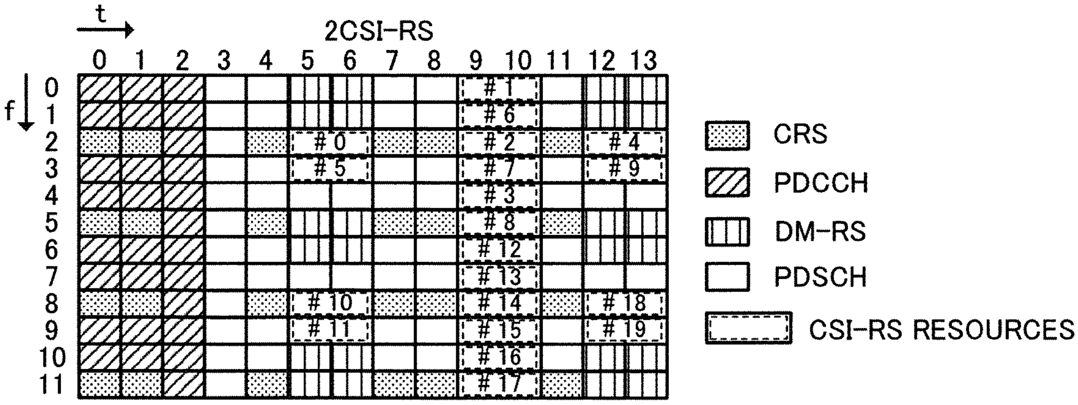


FIG. 4A

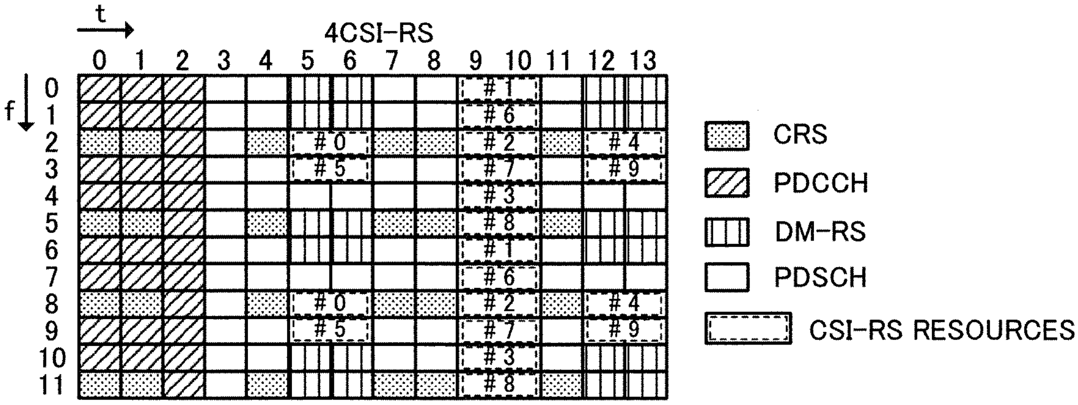


FIG. 4B

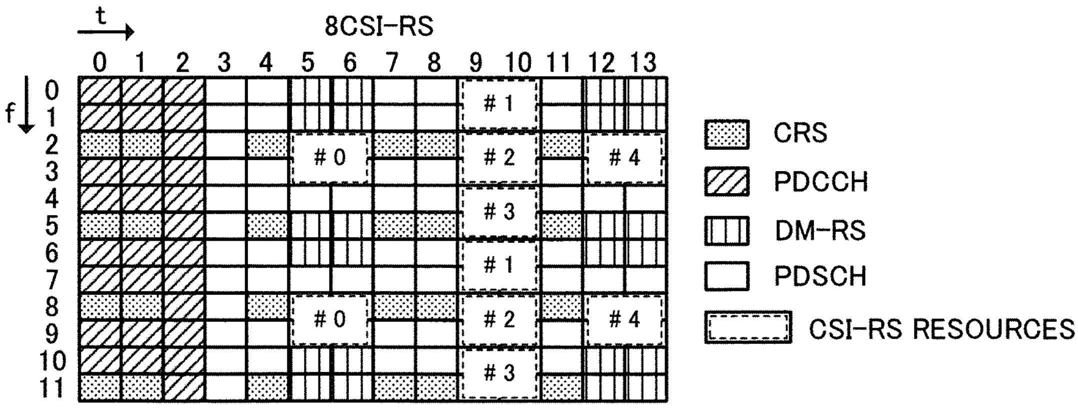


FIG. 4C

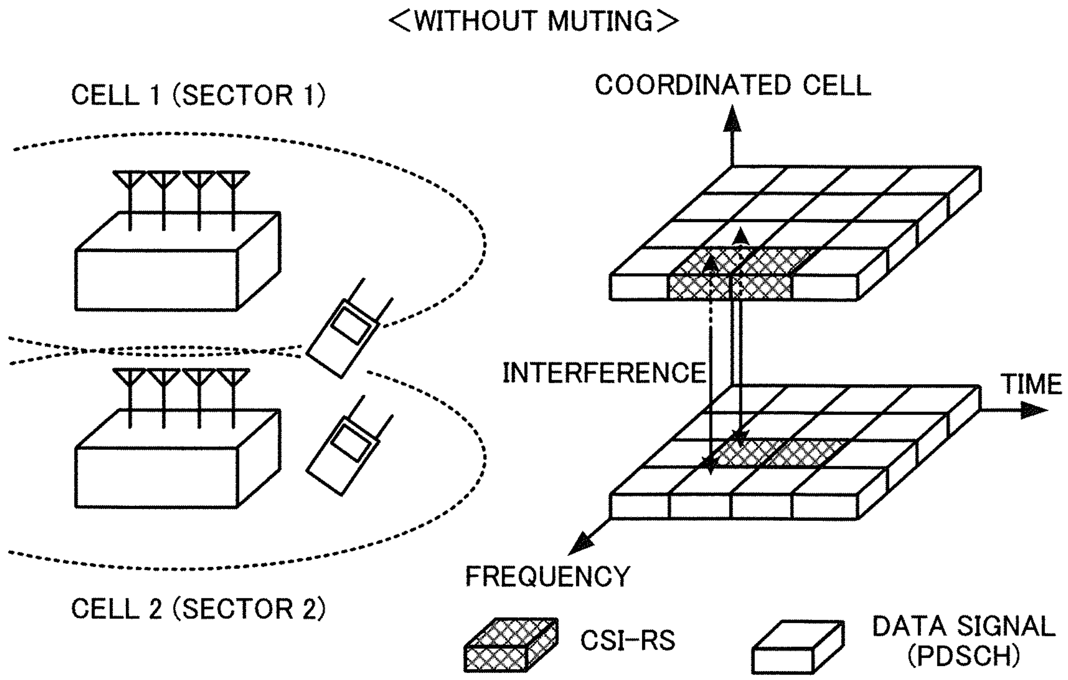
<WITHOUT MUTING>
CELL 1 (SECTOR 1)
COORDINATED CELL
INTERFERENCE
TIME
FREQUENCY
CELL 2 (SECTOR 2)
CSI-RS
DATA SIGNAL (PDSCH)

FIG. 5A

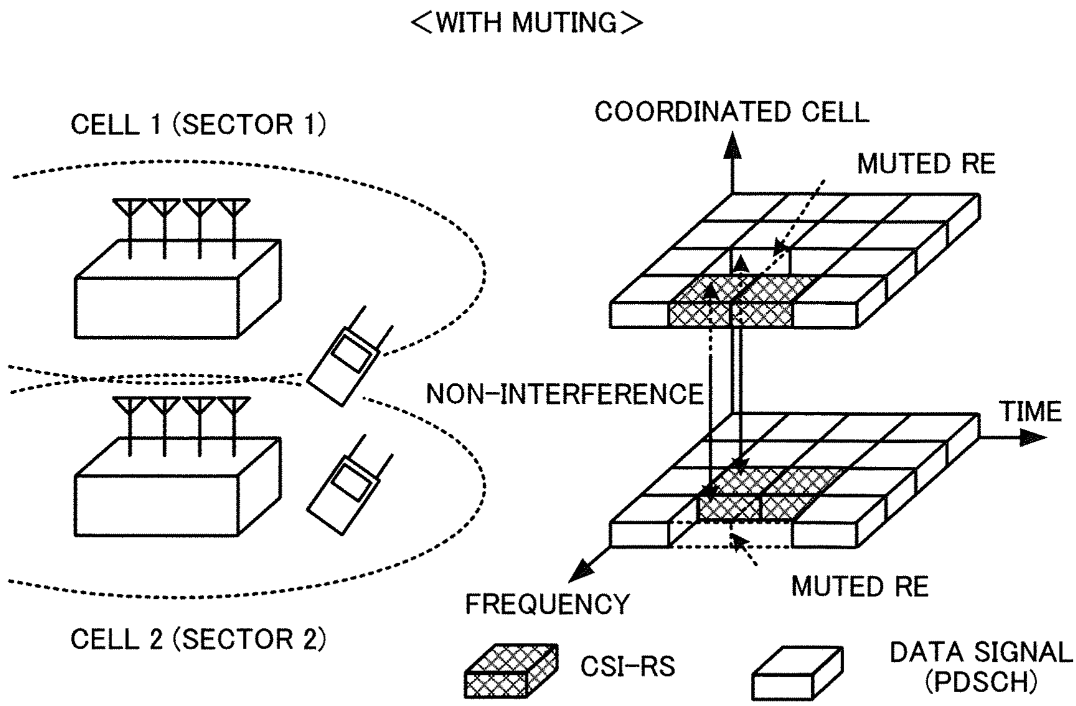
<WITH MUTING>
CELL 1 (SECTOR 1)
COORDINATED CELL
MUTED RE
NON-INTERFERENCE
TIME
FREQUENCY
MUTED RE
CELL 2 (SECTOR 2)
CSI-RS
DATA SIGNAL (PDSCH)

FIG. 5B

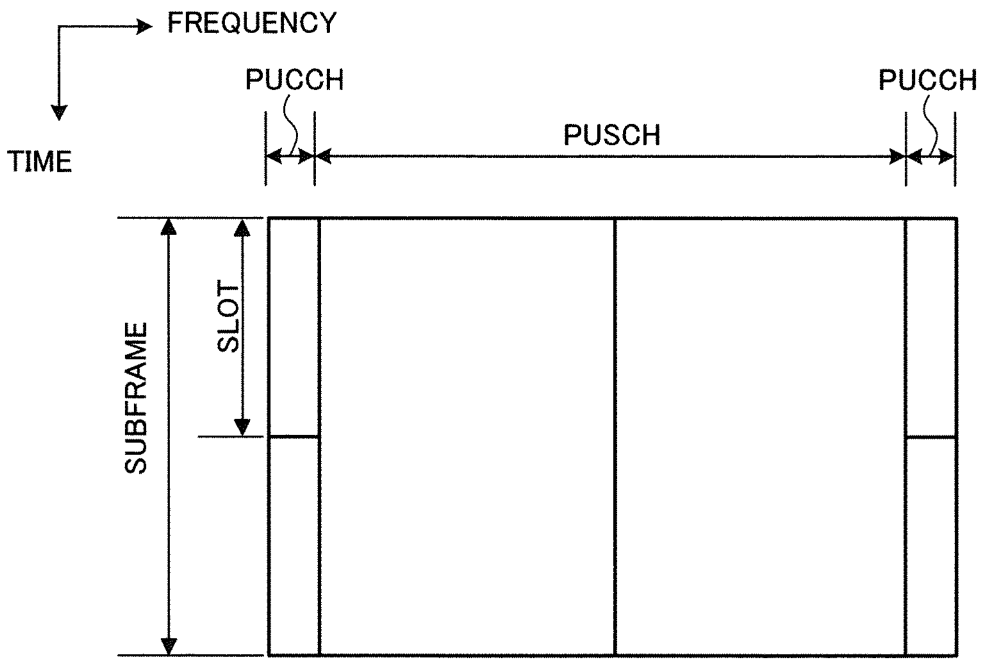


FIG. 6

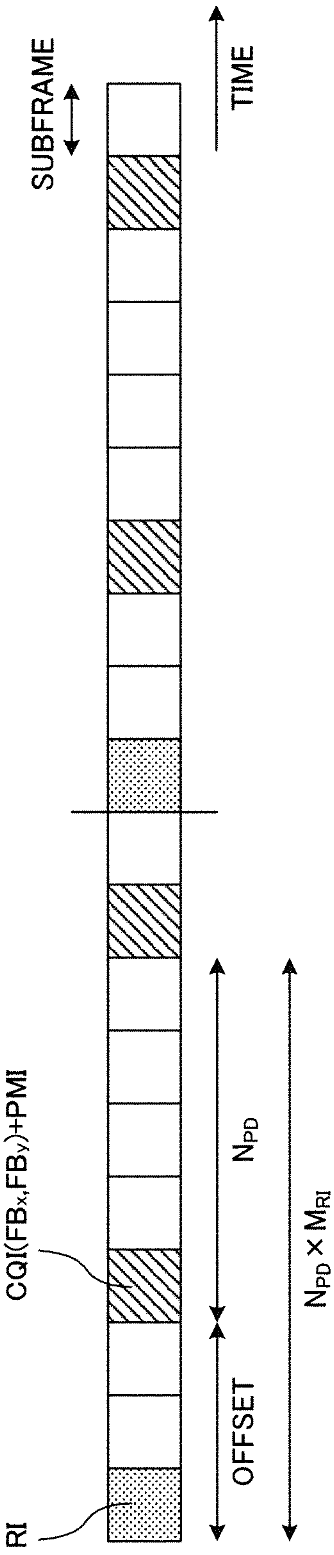
SUBFRAME
TIME
RI
CQI(FBx,FBy)+PMI
OFFSET
NPD
NPD × MRI

FIG. 7A

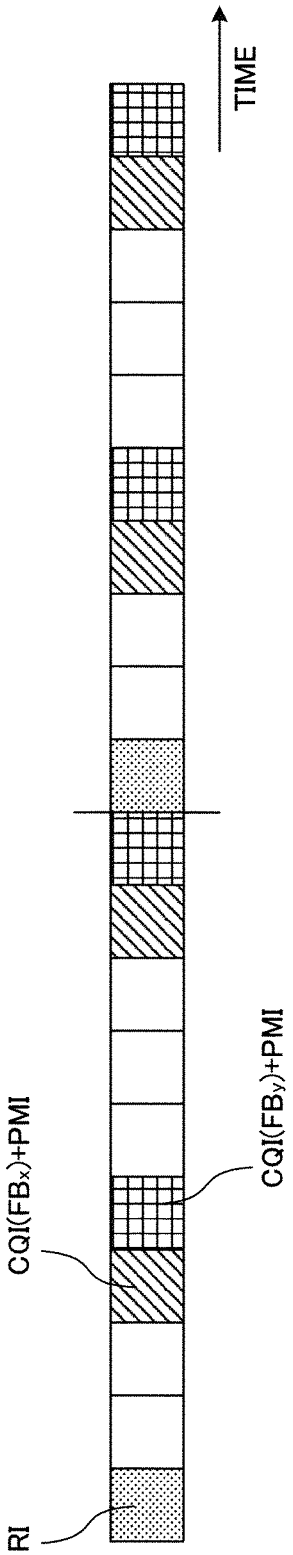
TIME
RI
CQI(FBx)+PMI
CQI(FBy)+PMI

FIG. 7B

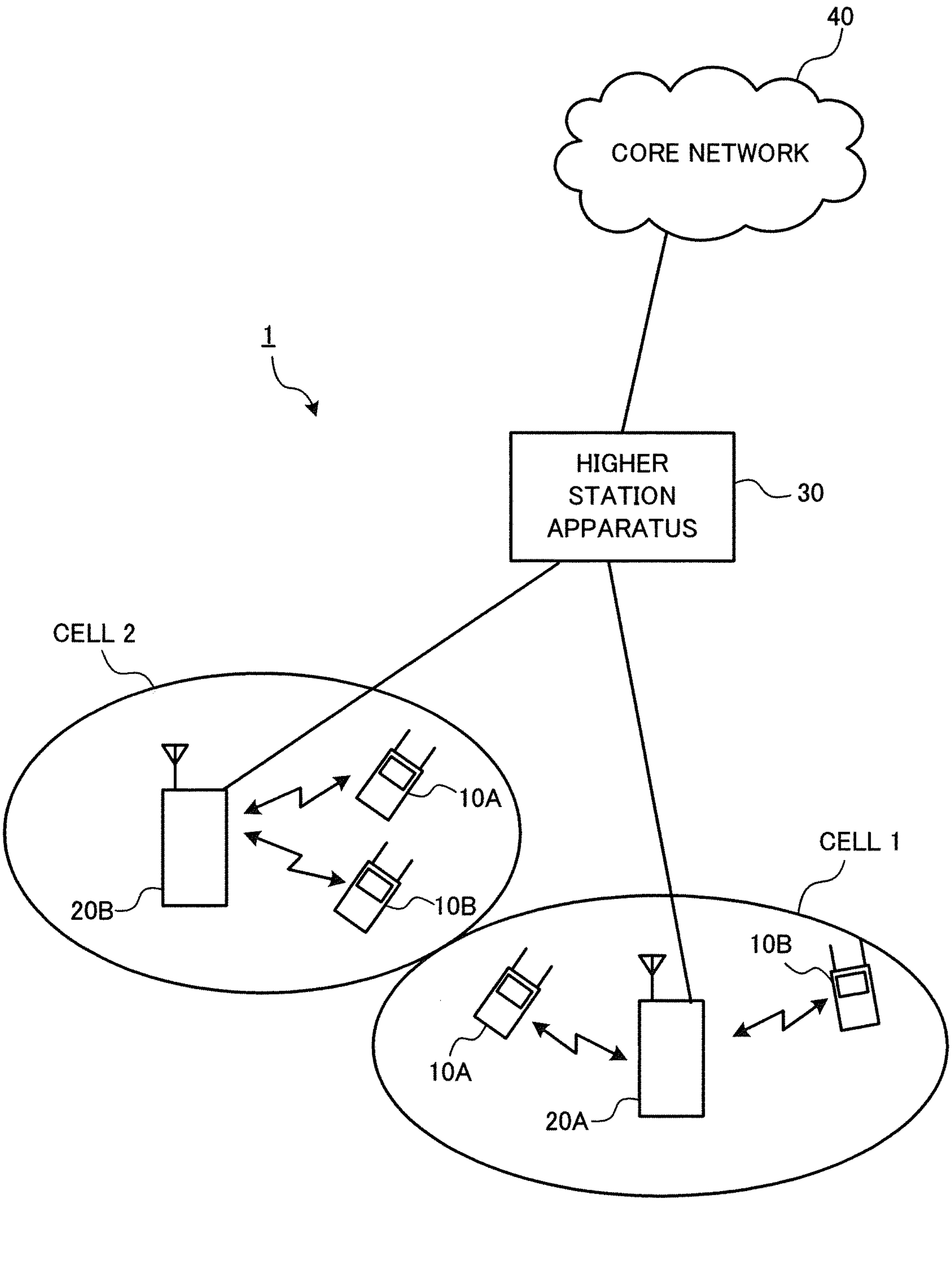
40
CORE NETWORK
1
HIGHER
STATION
APPARATUS
30
CELL 2
10A
10B
20B
CELL 1
10B
10A
20A

FIG. 8

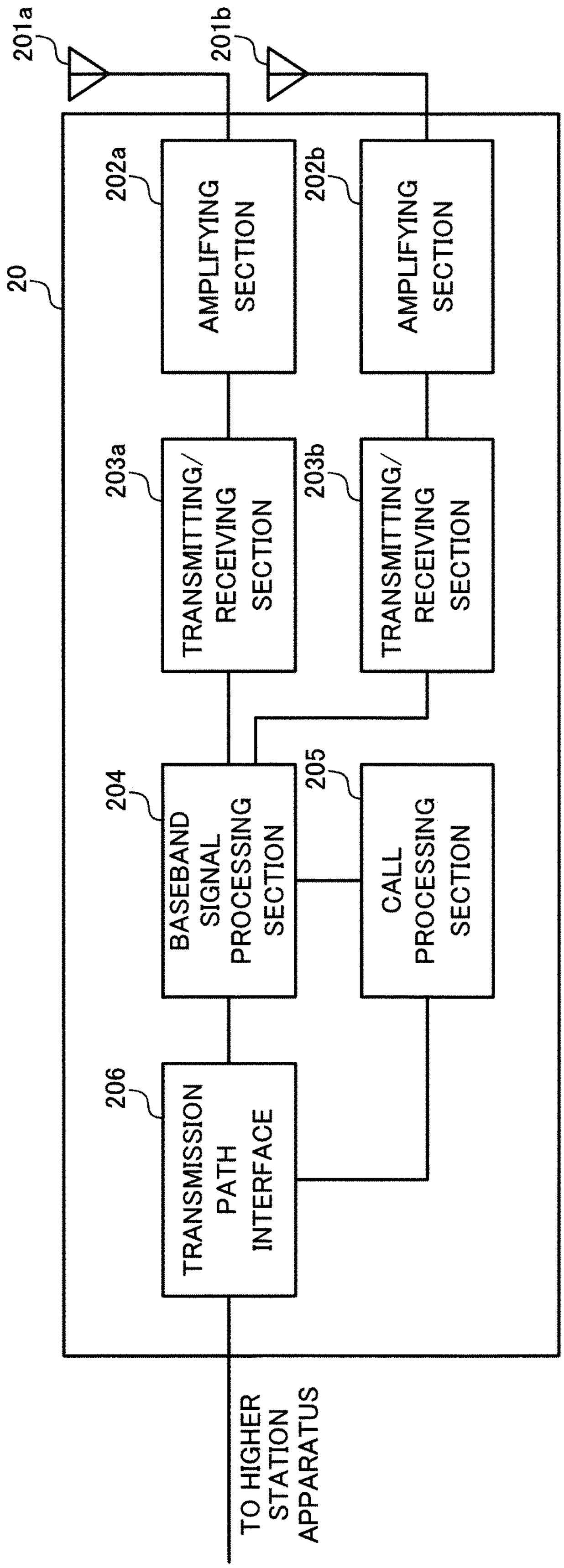
201a
201b
20
202a
AMPLIFYING SECTION
202b
AMPLIFYING SECTION
203a
TRANSMITTING/ RECEIVING SECTION
203b
TRANSMITTING/ RECEIVING SECTION
204
BASEBAND SIGNAL PROCESSING SECTION
205
CALL PROCESSING SECTION
206
TRANSMISSION PATH INTERFACE
TO HIGHER STATION APPARATUS

FIG. 9

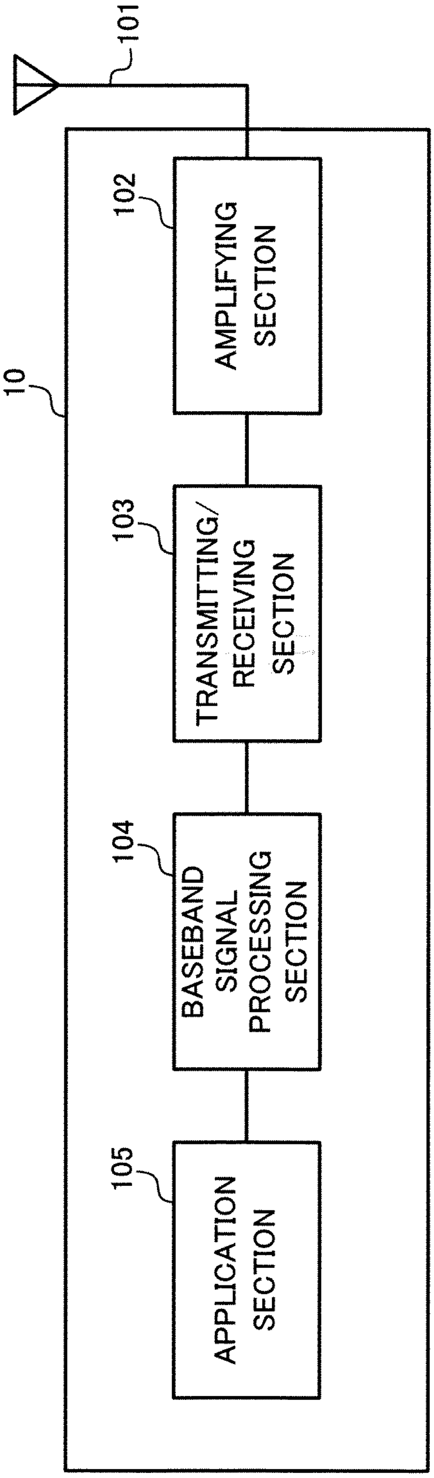
101
10
102
AMPLIFYING SECTION
103
TRANSMITTING/ RECEIVING SECTION
104
BASEBAND SIGNAL PROCESSING SECTION
105
APPLICATION SECTION

FIG. 10

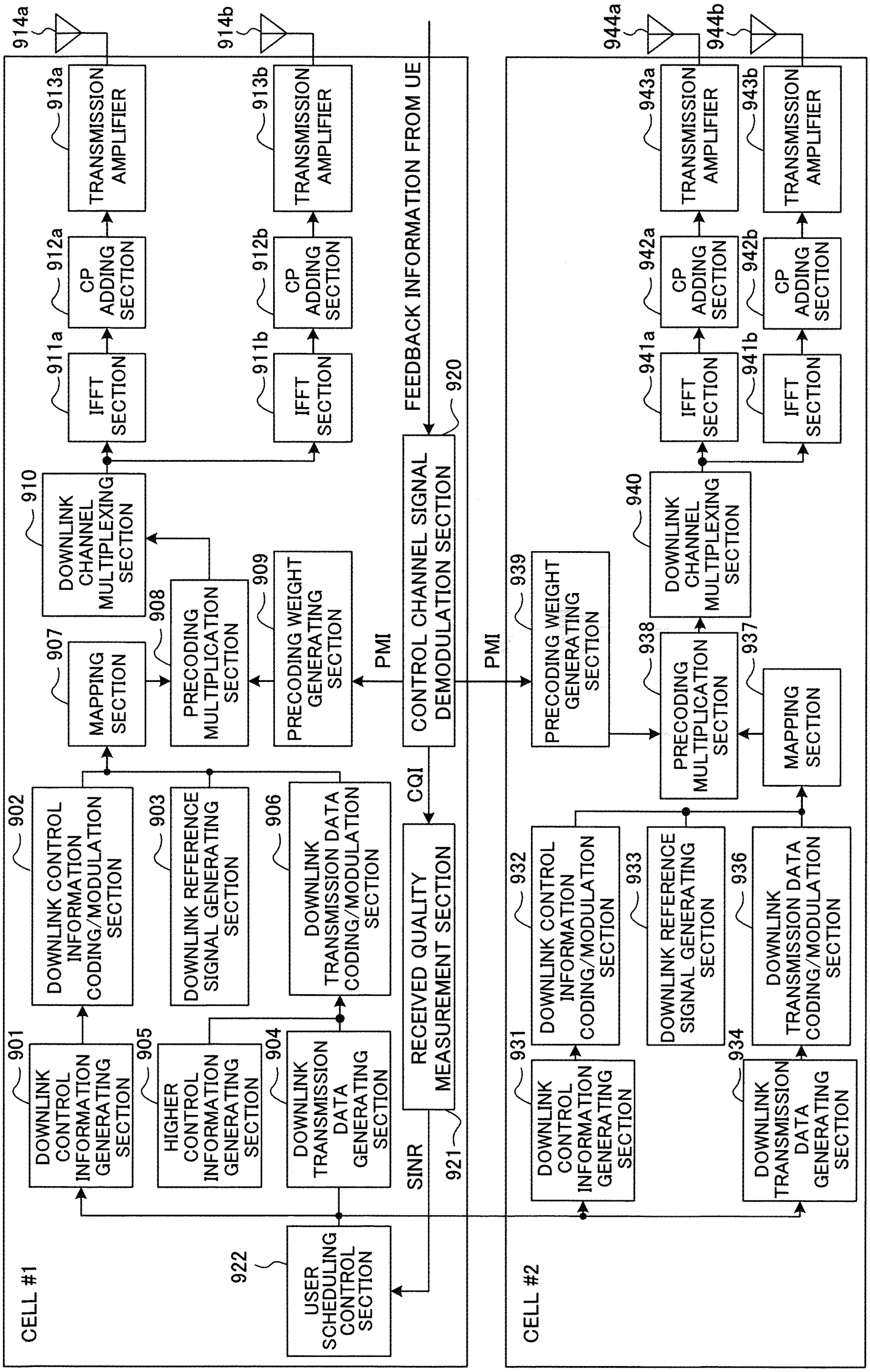
CELL #1
922 USER SCHEDULING CONTROL SECTION
901 DOWNLINK CONTROL INFORMATION GENERATING SECTION
905 HIGHER CONTROL INFORMATION GENERATING SECTION
904 DOWNLINK TRANSMISSION DATA GENERATING SECTION
902 DOWNLINK CONTROL INFORMATION CODING/MODULATION SECTION
903 DOWNLINK REFERENCE SIGNAL GENERATING SECTION
906 DOWNLINK TRANSMISSION DATA CODING/MODULATION SECTION
907 MAPPING SECTION
908 PRECODING MULTIPLICATION SECTION
909 PRECODING WEIGHT GENERATING SECTION
910 DOWNLINK CHANNEL MULTIPLEXING SECTION
911a IFFT SECTION
912a CP ADDING SECTION
913a TRANSMISSION AMPLIFIER
914a
911b IFFT SECTION
912b CP ADDING SECTION
913b TRANSMISSION AMPLIFIER
914b
FEEDBACK INFORMATION FROM UE
920 CONTROL CHANNEL SIGNAL DEMODULATION SECTION
921 RECEIVED QUALITY MEASUREMENT SECTION
SINR
CQI
PMI
PMI
CELL #2
931 DOWNLINK CONTROL INFORMATION GENERATING SECTION
934 DOWNLINK TRANSMISSION DATA GENERATING SECTION
932 DOWNLINK CONTROL INFORMATION CODING/MODULATION SECTION
933 DOWNLINK REFERENCE SIGNAL GENERATING SECTION
936 DOWNLINK TRANSMISSION DATA CODING/MODULATION SECTION
937 MAPPING SECTION
938 PRECODING MULTIPLICATION SECTION
939 PRECODING WEIGHT GENERATING SECTION
940 DOWNLINK CHANNEL MULTIPLEXING SECTION
941a IFFT SECTION
942a CP ADDING SECTION
943a TRANSMISSION AMPLIFIER
944a
941b IFFT SECTION
942b CP ADDING SECTION
943b TRANSMISSION AMPLIFIER
944b

FIG. 11

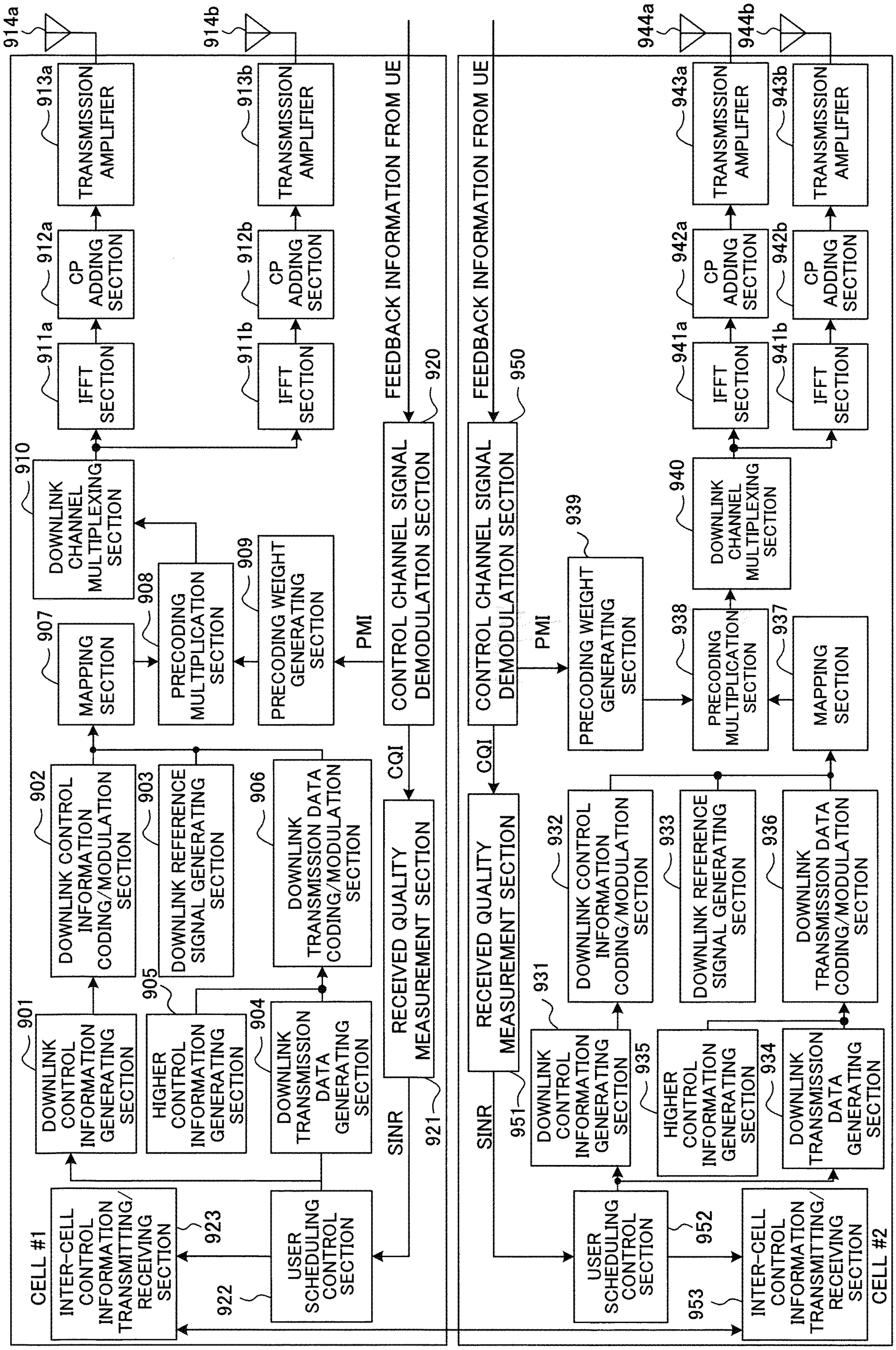
CELL #1
INTER-CELL CONTROL INFORMATION TRANSMITTING/ RECEIVING SECTION
923
922
USER SCHEDULING CONTROL SECTION
DOWNLINK CONTROL INFORMATION GENERATING SECTION
901
HIGHER CONTROL INFORMATION GENERATING SECTION
905
DOWNLINK TRANSMISSION DATA GENERATING SECTION
904
DOWNLINK CONTROL INFORMATION CODING/MODULATION SECTION
902
DOWNLINK REFERENCE SIGNAL GENERATING SECTION
903
DOWNLINK TRANSMISSION DATA CODING/MODULATION SECTION
906
MAPPING SECTION
907
PRECODING MULTIPLICATION SECTION
908
PRECODING WEIGHT GENERATING SECTION
909
DOWNLINK CHANNEL MULTIPLEXING SECTION
910
IFFT SECTION
911a
911b
CP ADDING SECTION
912a
912b
TRANSMISSION AMPLIFIER
913a
913b
914a
914b
SINR
921
RECEIVED QUALITY MEASUREMENT SECTION
CQI
PMI
CONTROL CHANNEL SIGNAL DEMODULATION SECTION
920
FEEDBACK INFORMATION FROM UE
FEEDBACK INFORMATION FROM UE
950
CONTROL CHANNEL SIGNAL DEMODULATION SECTION
PMI
CQI
RECEIVED QUALITY MEASUREMENT SECTION
SINR
951
939
PRECODING WEIGHT GENERATING SECTION
938
PRECODING MULTIPLICATION SECTION
937
MAPPING SECTION
940
DOWNLINK CHANNEL MULTIPLEXING SECTION
941a
941b
IFFT SECTION
942a
942b
CP ADDING SECTION
943a
943b
TRANSMISSION AMPLIFIER
944a
944b
931
DOWNLINK CONTROL INFORMATION GENERATING SECTION
932
DOWNLINK CONTROL INFORMATION CODING/MODULATION SECTION
933
DOWNLINK REFERENCE SIGNAL GENERATING SECTION
935
HIGHER CONTROL INFORMATION GENERATING SECTION
936
DOWNLINK TRANSMISSION DATA CODING/MODULATION SECTION
934
DOWNLINK TRANSMISSION DATA GENERATING SECTION
952
USER SCHEDULING CONTROL SECTION
953
INTER-CELL CONTROL INFORMATION TRANSMITTING/ RECEIVING SECTION
CELL #2

FIG. 12

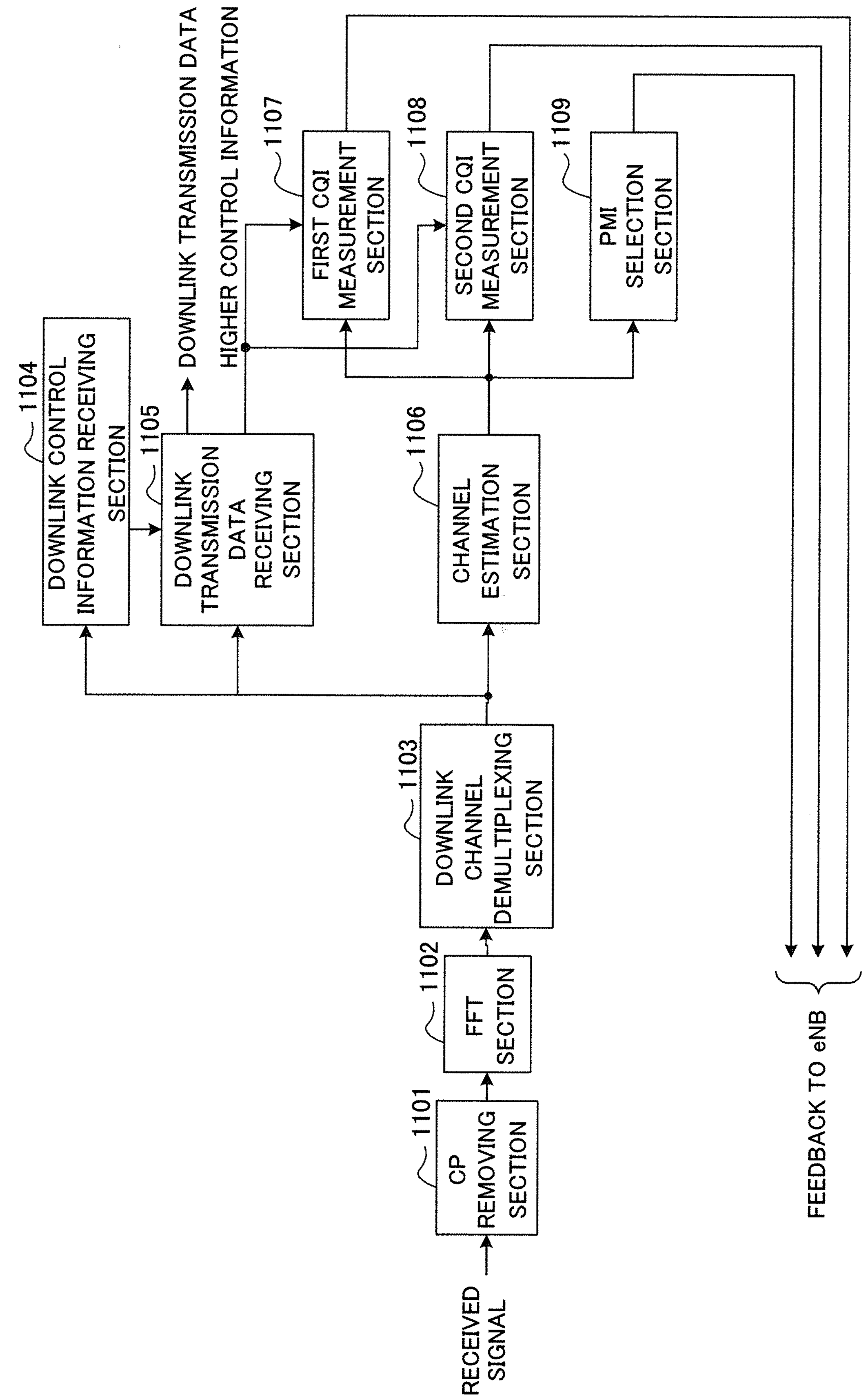
RECEIVED SIGNAL
1101
CP REMOVING SECTION
1102
FFT SECTION
1103
DOWNLINK CHANNEL DEMULTIPLEXING SECTION
1104
DOWNLINK CONTROL INFORMATION RECEIVING SECTION
1105
DOWNLINK TRANSMISSION DATA RECEIVING SECTION
DOWNLINK TRANSMISSION DATA
HIGHER CONTROL INFORMATION
1106
CHANNEL ESTIMATION SECTION
1107
FIRST CQI MEASUREMENT SECTION
1108
SECOND CQI MEASUREMENT SECTION
1109
PMI SELECTION SECTION
FEEDBACK TO eNB

FIG. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 2010304682 A1
- WO 2011079294 A1
- WO 2010082884 A1


### Non-patent literature cited in the description


- Feasibility Study for Evolved UTRA and UTRAN. *3GPP, TR 25.912 (V7.1.0),* September 2006